# EUROPÄISCHE PATENTSCHRIFT

(11) **EP 1 519 857 B1**
(45) Veröffentlichungstag und Bekanntmachung des Hinweises auf die Patenterteilung: **30.08.2006**
(21) Anmeldenummer: 03763582.8
(22) Anmeldetag: 25.06.2003
(51) Int. Cl.: B60R 21/00

(54) **ANORDNUNG ZUM AUSLENKEN EINES TEILES DER AUSSENHAUT EINES KRAFTFAHRZEUGES**
SYSTEM FOR DEVIATING PART OF THE EXTERNAL PANELLING OF A MOTOR VEHICLE
SYSTEME POUR DEVIER UN ELEMENT DE L'ENVELOPPE EXTERIEURE D'UN VEHICULE AUTOMOBILE

(30) Priorität: 10.07.2002 DE 10231796; 26.07.2002 DE 10234897
(43) Veröffentlichungstag der Anmeldung: 06.04.2005
(73) Patentinhaber: Takata-Petri AG, 63743 Aschaffenburg (DE)
(72) Erfinder: KALLISKE, Ingo, 14469 Berlin (DE); AL-SAMARAE, Sami, 13187 Berlin (DE); HAHN, Daniel, 10709 Berlin (DE); SCHLÖNVOIGT, Jens, 13189 Berlin (DE)
(74) Vertreter: Baumgärtel, Gunnar
(86) Internationale Anmeldenummer: PCT/DE2003/002153
(87) Internationale Veröffentlichungsnummer: WO 2004/007247

(56) Entgegenhaltungen:
- WO-A-01/23225
- US-A1- 2002 011 372
- PATENT ABSTRACTS OF JAPAN vol. 008, no. 061 (M-284), 23. März 1984 (1984-03-23) -& JP 58 211975 A (NISSAN JIDOSHA KK), 9. Dezember 1983 (1983-12-09)
- PATENT ABSTRACTS OF JAPAN vol. 2000, no. 10, 17. November 2000 (2000-11-17) -& JP 2000 203377 A (NISSAN MOTOR CO LTD), 25. Juli 2000 (2000-07-25)

## Beschreibung

Die Erfindung betrifft eine Anordnung zum Auslenken eines Teiles der Außenhaut eines Kraftfahrzeugs in einem Crash-Fall nach dem Oberbegriff des Patenanspruchs 1.

Durch das Auslenken eines Teiles der Außenhaut des Kraftfahrzeugs in Richtung auf den Außenraum in einem Crash-Fall soll die Möglichkeit geschaffen werden, beim Aufprall einer Person durch eine Bewegung des ausgelenkten Teiles entgegen der Auslenkrichtung kontrolliert Aufprallenergie abzubauen und zugleich einen Kontakt der Person mit hinter der Außenhaut gelegenen, starren Kraftfahrzeugelementen, wie z.B. einem Motorblock, zu verhindem. Eine gattungsgemäße Anordnung umfasst hierzu eine Einrichtung zum Auslenken des Teiles der Außenhaut, die an mindestens einer Stelle dieses Teiles angreift und die bei dem Aufprall einer Person eine Bewegung dieses Teiles entgegen der Auslenkrichtung zulässt, wobei Aufprallenergie abgebaut wird.

Aus der JP 58 211 975 A ist eine Auslenkeinrichtung für eine Motorhaube eines Kraftfahrzeugs bekannt, die beim Aufprall einer Person auf das vordere, frontseitige Ende der Motorhaube eine Auslenkung des hinteren, windschutzscheibenseitigen Endes der Motorhaube bewirkt. Wenn im ausgelenkten Zustand der Motorhaube eine Person derart auf die Motorhaube auftrifft, dass die Aufprallkräfte entgegen der Auslenkrichtung der Motorhaube wirken, so wird die Motorhaube entgegen der Auslenkrichtung bewegt, wobei das hintere Ende der Motorhaube entlang einer Schrägfläche der Kraftfahrzeugkarosserie gleitet und hierbei umgebogen wird, so dass Aufprallenergie abgebaut wird.

In der WO 01/23 225 A1 ist eine Einrichtung zum Anheben der Motorhaube eines Kraftfahrzeugs in einem Crash-Fall beschrieben, der durch einen Pre-Crash-Sensor detektiert werden kann. Dieser Sensor löst ein Anheben der Motorhaube aus, wenn er einen unmittelbar bevorstehenden, unausweichlichen Unfall detektiert. Eine als Folge dieses. Unfalles auf die Motorhaube prallende Person wird durch das Anheben der Motorhaube vor einem Kontakt mit dem unter der Haube befindlichen Motorblock geschützt. Da der Aufprall einer Person auf die Motorhaube und die hiermit verbundenen Aufprallkräfte zu einer Bewegung der Motorhaube entgegen der Auslenkrichtung, also zu einem Ablenken der Motorhaube führen, kann zudem kontrolliert Energie abgebaut werden, so dass die Verletzungsgefahr verglichen mit einem unmittelbaren Aufprall auf ein starres Teil des Kraftfahrzeugs vermindert wird.

Bei dieser Anordnung besteht allerdings das Problem, dass der Aufprall einer Person auf die Außenhaut eines Kraftfahrzeugs, z.B. auf dessen Motorhaube, häufig in mehreren Schritten erfolgt. Entsprechend dem üblichen kinematischen Ablauf einer Fußgänger-Fahrzeug-Kollision geht dem Kopfaufprall an der Motorhaube nämlich in der Regel ein Anprall des Oberkörpers. Der Aufprall des Oberkörpers und die hiermit verbundene Aufprallenergie können bereits zu einem Absenken der zuvor ausgelenkten Motorhaube führen, so dass beim späteren Aufprall des Kopfes kein hinreichendes Schutzpotential mehr zur Verfügung steht. Dabei ist jedoch gerade der Schutz des Kopfes eines mit dem Fahrzeug zusammenprallenden Fußgängers oder Radfahrers von besonderer Bedeutung.

Der Erfindung liegt daher das Problem zugrunde, eine Anordnung zum Auslenken eines Abschnittes der Außenhaut eines Kraftfahrzeugs der eingangs genannten Art weiter zu verbessern, insbesondere im Hinblick auf den Schutz des Kopfes einer aufprallenden Person.

Dieses Problem wird erfindungsgemäß durch die Schaffung einer Anordnung mit den Merkmalen des Patentanspruchs 1 gelöst.

Danach sind Mittel vorgesehen, die bei einem Aufprall einer Person auf das ausgelenkte Teil der Außenhaut des Kraftfahrzeugs, bei dem Aufprallkräfte entgegen der Auslenkrichtung wirken, einer Bewegung des Teiles der Außenhaut entgegen der Auslenkrichtung entgegenwirken können. Dabei ist die zum Auslenken eines Teiles der Außenhaut des Kraftfahrzeugs dienende Auslenkeinrichtung derart in Abhängigkeit von dem Ort, der Zeit und/oder der Richtung des Aufpralls steuerbar, dass in Abhängigkeit von dem Zeitpunkt des Aufpralles (nach dem Auslösen der Auslenkeinrichtung bzw. nach einem vorhergehenden ersten Aufprall) auf den Teil der Außenhaut und/oder in Abhängigkeit von dem Ort des Aufpralls auf den ausgelenkten Teil der Außenhaut und/oder in Abhängigkeit von der Richtung des Aufpralls auf den ausgelenkten Teil der Außenhaut die Auslenkeinrichtung eine Bewegung des Teiles der Außenhaut entgegen der Auslenkrichtung zulässt oder nicht zulässt.

Hierdurch kann in Abhängigkeit von Erfahrungswerten über die zeitliche Abfolge des Aufpralls des Oberkörpers einer Person einerseits und ihres Kopfes andererseits sowie in Abhängigkeit von Erfahrungswerten über den Ort und die Richtung des Aufpralls des Oberkörpers einerseits und des Kopfes andererseits die Auslenkeinrichtung derart gesteuert werden, dass sie eine Bewegung entgegen der Auslenkrichtung gerade dann zulässt, wenn nach den verfügbaren Erfahrungswerten der Kopf einer außerhalb des Fahrzeugs befindlichen Person auf den ausgelenkten Teil der Außenhaut des Fahrzeugs, z.B. auf eine ausgelenkte Motorhaube, auftrifft.

Aufgrund der Bewegbarkeit und Verformbarkeit des ausgelenkten Teiles der Außenhaut ist das Merkmal, wonach die Auslenkeinrichtung eine Bewegung des Teiles der Außenhaut entgegen der Auslenkrichtung zulässt oder nicht zulässt nicht in dem Sinne absolut zu verstehen, dass entweder eine Bewegung oder alternativ gar keine Bewegung der Außenhaut stattfindet. Vielmehr kann, in Abhängigkeit von der Stärke des Aufpralls, auch in solchen Fällen, in denen an sich keine Bewegung der Außenhaut entgegen der Auslenkrichtung stattfinden soll, dem System eine gewisse Bewegung aufgezwungen werden. Maßgeblich für das Merkmal ist vielmehr, dass die Auslenkrichtung derart gesteuert ist, dass sie unter gegebenen Bedingungen (in Abhängigkeit vom Zeitpunkt, dem Ort sowie der Richtung des Aufpralles) die Möglichkeit einer Bewegung des Teiles der Außenhaut entgegen der Auslenkrichtung eröffnet oder dieser Bewegung entgegenwirkt, um sie möglichst zu verhindern.

Mit der erfindungsgemäßen Lösung wird einerseits durch Auslenken eines Teiles der Außenhaut ein Deformationsweg bereitgestellt, um die durch den Kopf eines Fußgängers oder eines Radfahrers auf die Außenhaut übertragene Energie auf akzeptablem Niveau abzubauen, ohne dass ein Kontakt mit hinter der Außenhaut befindlichen steifen Fahrzeugteilen, wie z.B. dem Motorblock, stattfindet. Dabei wird durch die Steuerung der Auslenkeinrichtung erreicht, dass dieser Deformationsweg nicht schon bei einem dem Kopfanprall vorhergehenden Aufprall des Oberkörpers verbraucht wird. Vielmehr soll sich bei einem dem Kopfanprall vorhergehenden Aufprall des Oberkörpers der zu Verfügung gestellte Deformationsweg möglichst nicht verringern.

Ein Unfall, der zur Aktivierung der Auslenkeinrichtung führt, kann durch eine Kontaktsensorik oder eine Näherungssensorik (Pre-Crash-Sensor) detektiert werden. Die entsprechenden Sensorik erzeugt bei Detektion eines Unfalles ein Signal, aufgrund dessen die Auslenkeinrichtung das entsprechende Teil des Kraftfahrzeugs zum Außenraum hin auslenkt. Die Aktivierung der Auslenkeinrichtung und der Aufprall des Kopfes dürfen dabei zeitlich nicht zusammenfallen. Dies bedingt entsprechend kurze Auslenkzeiten. Hierzu ist der entsprechende Teil der Außenhaut des Kraftfahrzeugs, z.B. die Motorhaube, so auszulegen, dass dieser ohne bleibende Verformung in die ausgelenkte Position (Schutzposition) gebracht werden kann. Andererseits darf die Außenhaut jedoch nicht so steif ausgebildet sein, dass die Belastungsgrenzwerte des Kopfes allein aufgrund der Steifigkeit der Außenhaut überschritten werden. Insbesondere muss die Außenhaut auch im Bereich der Stellen, an denen die Auslenkeinrichtung angreift, hinreichend nachgiebig ausgebildet sein, so dass die Belastungsgrenzwerte für den Kopf nicht überschritten werden.

Insgesamt wird mit der erfindungsgemäßen Anordnung eine gleichmäßige und geringe Kopfbelastung beim Aufprall auf ein Teil der Außenhaut eine Kraftfahrzeugs erreicht, um schwere Kopfverletzungen zu vermeiden.

Zur Steuerung der Auslenkeinrichtung in Abhängigkeit vom Zeitpunkt des Aufpralls kann vorgesehen sein, dass die Auslenkeinrichtung erst nach Ablauf eines vorgegebenen Zeitraumes nach dem Aktivieren der Auslenkeinrichtung eine Bewegung des ausgelenkten Teiles der Außenhaut entgegen der Auslenkrichtung zulässt, indem die Kraft, mit der die Auslenkeinrichtung auf den ausgelenkten Teil der Außenhaut einwirkt, zeitlich gesteuert wird. Die Steuerung ist dabei derart, dass die Kraft, mit der die Auslenkeinrichtung auf die Außenhaut einwirkt, nach dem Auslenken des Teiles der Außenhaut mit der Zeit abnimmt. Dies bedeutet, dass bei einem Aufprall des Oberkörpers einer Person unmittelbar nach dem Auslenken eines Teiles der Außenhaut die von der Auslenkeinrichtung aufgebrachte Kraft noch groß genug ist, um eine Rückstellbewegung des Teiles der Außenhaut zu verhindern. Beim späteren Aufprall des Kopfes hat die Kraft dann soweit abgenommen, dass nun durch eine Bewegung des Teiles der Außenhaut entgegen der Auslenkrichtung und somit entgegen der Wirkrichtung des Druckes kontrolliert Energie abgebaut werden kann.

Hierzu kann eine Auslenkeinrichtung verwendet werden, die den auszulenkenden Teil der Außenhaut unter der Wirkung des Druckes eines Fluides, insbesondere eines Gases, auslenkt, wobei der Druck des Fluides zeitlich gesteuert ist und nach dem Auslenken des Teiles der Außenhaut abnimmt, so dass eine Bewegung des Teiles der Außenhaut entgegen des Druckes des Fluides möglich wird.

Der Druck des Fluides, der auf den ausgelenkten Teil der Außenhaut einwirkt, kann beispielsweise durch Ablassen von Teilen des Fluides vermindert werden, indem entsprechende Abströmöffnungen zum Ablassen des Fluides vorgesehen sind. Die Größe dieser Abströmöffnungen kann zudem steuerbar sein, um den Druck des Fluides gezielt in Abhängigkeit von der Zeit einstellen zu können.

Das Auslösen der Auslenkeinrichtung kann beispielsweise pyrotechnisch erfolgen, wobei darüber hinaus auch die Erzeugung oder Freisetzung eines zum Auslenken der Außenhaut verwendeten Gases pyrotechnisch erfolgen kann.

Gemäß einer Ausführungsform umfasst die Auslenkeinrichtung ein zur Druckerzeugung mit Fluid befüllbares Element, z.B. einen aufblasbaren Gassack, der auf den auszulenkenden Teil der Außenhaut einwirkt. Nach einer anderen Ausführungsform weist die Auslenkeinrichtung einen (z.B. in einem Zylinder geführten) Kolben auf, der auf den auszulenkenden Teil der Außenhaut einwirkt und beispielsweise durch einen von einem Fluid erzeugten Druck bewegt wird.

Nach einer anderen Variante der zeitlichen Steuerung der Auslenkeinrichtung ist die Auslenkeinrichtung derart verriegelbar, dass sie im verriegelten Zustand keine Bewegung des ausgelenkten Teiles der Außenhaut entgegen der Auslenkeinrichtung zulässt, wobei die Verriegelung durch den Aufprall eines Körperteiles (z.B. des Oberkörpers) einer Person auf die Außenhaut lösbar ist, so dass bei einem weiteren Aufprall (z.B. des Kopfes) eine Bewegung des ausgelenkten Teiles der Außenhaut entgegen der Auslenkrichtung erfolgen kann. Die Verriegelung kann beispielsweise durch einen Haken erfolgen, der aufgrund der bei einem ersten Aufprall erzeugten Kraft gelöst wird.

Nach einer weiteren Variante der Erfindung lässt die Auslenkeinrichtung nur bei dem Aufprall eines Körperteiles einer Person innerhalb eines bestimmten Bereiches des ausgelenkten Teiles der Außenhaut eine Bewegung dieses Teiles entgegen der Auslenkrichtung zu. Dieser Bereich ist so gewählt, dass er gerade diejenigen Stellen des Teiles der Außenhaut umfasst, auf die nach den zu Verfügung stehenden Erfahrungswerten bei einem typischen Unfallablauf der Kopf eines Fußgängers oder eines Radfahrers aufprallt.

In einer bevorzugten Ausführungsform umfasst jener Bereich insbesondere die Stellen der Außenhaut, an denen die Auslenkeinrichtung angreift. Die Auslenkeinrichtung kann hierzu über ein elastisch oder plastisch deformierbares Element an der Außenhaut angreifen. Das entsprechende Element kann durchaus auch mehrteilig ausgebildet sein, so dass die Deformierbarkeit durch die Bewegung zweier Bestandteile des Elementes zueinander erreicht wird, z.B. durch die Bewegung eines Kolbens in einem Zylinder.

Das elastisch oder plastisch deformierbare Element wird bei einem Aufprall einer Person auf die Außenhaut des Kraftfahrzeugs in der Umgebung dieses Elementes derart deformiert, dass sich der ausgelenkte Teil der Außenhaut entgegen der Auslenkrichtung (unter Deformation jedes Elementes) bewegen kann.

Das deformierbare Element kann beispielsweise durch ein federelastisches Element, durch ein flexibles Koppelelement der Auslenkeinrichtung (z.B. in Form eines flexiblen Zugmittels) oder durch ein teleskopierbares Element (z.B. in Form eines in einem Zylinder geführten Kolbens) gebildet werden.

Alternativ oder zusätzlich zu einem deformierbaren Element kann vorgesehen sein, dass die Auslenkeinrichtung reversibel oder zumindest teilweise reversibel ausgebildet ist, so dass unmittelbar die zum Auslenken der Außenhaut dienenden Elemente der Auslenkeinrichtung bei dem Aufprall eines Körperteiles einer Person (innerhalb eines bestimmten Bereiches der Außenhaut) eine Bewegung des Teiles der Außenhaut entgegen der Auslenkeinrichtung zulassen.

Nach einer weiteren Erfindungsvariante lässt die Auslenkeinrichtung eine Bewegung des ausgelenkten Teiles der Außenhaut entgegen der Auslenkrichtung nur dann zu, wenn der Aufprall eines Körperteiles einer Person auf die Außenhaut entlang eines bestimmten, vorgebbaren Richtungsbereiches (entsprechend einem vorgegebenen Bereich möglicher Kraftangriffsrichtungen) erfolgt.

Dies kann beispielsweise durch Verwendung eines Deformationselementes erreicht werden, das nur bei einem Aufprall mit einer Kraftangriffsrichtung innerhalb des vorgegebenen Raumwinkelbereiches deformierbar ist. Gemäß einer anderen Ausführungsform mit einer reversiblen oder teilweise reversiblen Auslenkeinrichtung lässtdiese aufgrund ihrer Reversibilität eine Bewegung der Außenhaut nur dann zu, wenn die auf die Auslenkeinrichtung ausgeübte Kraft eine Richtung aufweist, die innerhalb des vorgegebenen Richtungsbereiches liegt.

Die Auslenkeinrichtung kann zum Auslenken eines Teiles der Außenhaut des Kraftfahrzeugs beispielsweise einen Hebelmechanismus mit mindestens einem schwenkbaren Hebel aufweisen. Andererseits kann die Auslenkeinrichtung ein beweglich geführtes Zugmittel umfassen, das zum Auslenken eines Teiles der Außenhaut gestrafft wird.

Um eine Bewegung des ausgelenkten Teiles der Außenhaut entgegen der Auslenkrichtung zuzulassen, wird der schwenkbar gelagerte Hebel der Auslenkeinrichtung in gegengesetzter Richtung verschwenkt bzw. das zu bewegende Teil der Außenhaut entgegen der Spannung des Zugmittels bewegt. Der schwenkbare Hebel bzw. das Zugmittel können dabei derart angeordnet und ausgebildet sein, dass eine Bewegung des ausgelenkten Teiles der Außenhaut entgegen der Auslenkrichtung nur dann möglich ist, wenn die durch den Aufprall eines Körperteiles (insbesondere des Kopfes) einer Person ausgeübte Kraft an einem bestimmten Teilbereich und/oder mit einer bestimmten Richtung an dem ausgelenkten Teil angreift.

In entsprechender Weise kann auch bei der Auslenkung eines Teiles der Außenhaut mittels eines Kolbens vorgesehen sein, dass der Kolben derart angeordnet und derart geführt ist, dass eine Bewegung des ausgelenkten Teiles entgegen der Auslenkrichtung nur bei einem Aufprall auf einen bestimmten Bereich des ausgelenkten Teiles und/oder bei einer bestimmten Kraftangriffsrichtung möglich ist.

In einer Weiterbildung der Erfindung ist die Auslenkeinrichtung mit einem elastischen Element gekoppelt, dass die Auslenkeinrichtung in Auslenkrichtung vorspannt. Es ist ferner ein Verriegelungselement vorgesehen, welches einem Auslenken des entsprechenden Teiles der Außenhaut durch die Auslenkeinrichtung entgegenwirkt und welches in einem Crash-Fall entweder sensorgesteuert oder durch die beim Aufprall einer Person erzeugte Kraft entriegelbar ist.

Die erfindungsgemäße Lösung ist insbesondere vorteilhaft anwendbar zum Auslenken (Anheben) einer Klappe eines Kraftfahrzeugs, wie z.B. der Motorhaube oder der Kofferraumklappe, in einem Crash-Fall, wobei die Angriffsstelle der Auslenkeinrichtung vorzugsweise im Bereich des fahrgasttraumseitigen Endes der entsprechenden Klappe anzuordnen ist.

Weitere Merkmale und Vorteile der Erfindung werden bei der nachfolgenden Beschreibung von Ausführungsbeispielen anhand der Figuren deutlich werden.

Es zeigen:
- Fig.1a: eine schematische Darstellung einer Anordnung zum Anheben einer Motorhaube mittels eines aufblasbaren Gassackes;
- Fig. 1b: die Anordnung aus Figur 1a nach dem Anheben der Motorhaube;
- Fig. 2a: eine schematische Darstellung einer Anordnung zum Anheben einer Motorhaube mittels eines durch Gasdruck bewegbaren Kolbens;
- Fig. 2b: die Anordnung aus Figur 2a nach dem Anheben der Motorhaube;
- Fig. 3a: eine Abwandlung des Ausführungsbeispiels aus Figur 2a;
- Fig. 3b: die Anordnung aus Figur 3a nach dem Anheben der Motorhaube;
- Fig. 4a: eine schematische Darstellung einer Anordnung zum Anheben einer Motorhaube unter Verwendung eines Zugmittels;
- Fig. 4b: die Anordnung aus Fig. 4a nach dem Anheben der Motorhaube;
- Fig. 5a: eine Weiterbildung des Ausführungsbeispiels aus Figur 4a;
- Fig. 5b: die Anordnung aus Figur 5a nach dem Anheben der Motorhaube;
- Fig. 6a: eine schematische Darstellung einer Anordnung zum Anheben einer Motorhaube unter Verwendung eines Schwenkhebels und einer hierauf einwirkenden Feder;
- Fig. 6b: die Anordnung aus Figur 6a nach dem Anheben der Motorhaube;
- Fig.7a: eine schematische Darstellung einer Anordnung zum Anheben der Außenseite einer Motorhaube mittels eines aufblasbaren Gassackes;
- Fig. 7b: die Anordnung aus Figur 7a nach dem Anheben der Motorhaube;
- Fig. 8: eine schematische Darstellung einer Anordnung zum Anheben einer Motorhaube unter Verwendung eines Gassackes, der zusätzlich an die Motorhaube angrenzende Bereiche eines Kraftfahrzeugs abdeckt;
- Fig. 9: eine schematische Darstellung einer Anordnung zum Anheben einer Motorhaube unter Verwendung eines Gassackes, der sich entlang der äußeren Ränder der Motorhaube erstreckt;
- Fig. 10a: ein Scharnier für eine Motorhaube zur Verwendung bei einer der Anordnungen gemäß den Figuren 1a bis 9;
- Fig. 10b: das Scharnier gemäß Figur 10a nach dem Anheben einer Motorhaube.

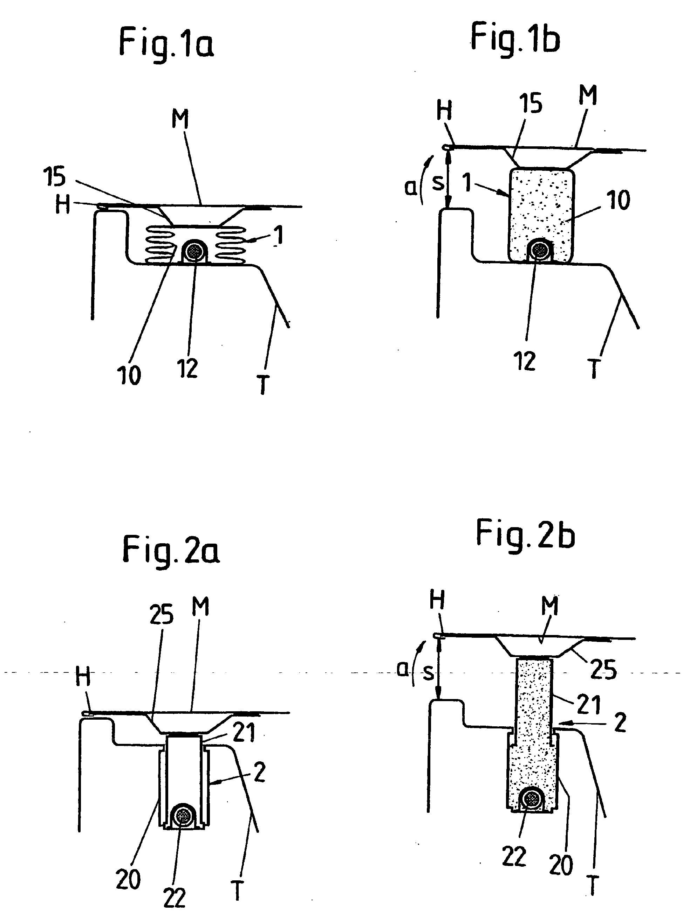

Figur 1a zeigt schematisch eine Motorhaube M eines Kraftfahrzeugs im Bereich ihres hinteren Endes H, d. h. im Bereich ihres der Fahrgastzelle, insbesondere der Windschutzscheibe, zugewandten Endes.

Im Bereich des in Fahrtrichtung hinteren, der Fahrgastzelle zugewandten Endes H der Motorhaube M ist zwischen einer tragenden Struktur T des Kraftfahrzeugs und der Motorhaube M eine Auslenkeinrichtung 1 angeordnet, mit der die Motorhaube M in einem Crash-Fall angehoben werden kann, um einen Deformationsweg für eine als Folge des Unfalles auf die Motorhaube aufprallende Person, z. B. einen Fußgänger oder einen Fahrradfahrer, zur Verfügung zu stellen. Diese Auslenkeinrichtung 1 umfasst einen auf der tragenden Struktur T des Kraftfahrzeugs 1 angeordneten, mittels eines Gasgenerators 12 aufblasbaren Gassack 1, der sich in dem in Figur 1a gezeigten, gefalteten Zustand zwischen der tragenden Struktur T und der Motorhaube M erstreckt. Oberhalb des Gassackes 10 ist an der Motorhaube M ein Kraftübertragungselement 15 angeordnet, über das der Gassack 1 auf die Motorhaube M einwirken kann.

Wird mittels eines sogenannten Pre-Crash-Sensors in Form eines Näherungssensors ein unmittelbar bevorstehender, unausweichlicher Unfall erkannt oder wird mittels einer Kontaktsensorik ein bereits stattfindender Unfall erkannt, so wird die Auslenkeinrichtung 1 ausgelöst, indem der Gasgenerator 12 gezündet wird. Der Gasgenerator 12 erzeugt mittels einer pyrotechnischen Ladung ein Gas und/oder setzt ein bereits gespeichertes Gas frei, welches in den Gassack 10 strömt, so dass dieser Aufgeblasen wird und sich entfaltet.

Beim Aufblasen des Gassackes 10 drückt dieser über das Kraftübertragungselement 15 auf die Motorhaube M, so dass diese angehoben wird, wie in Figur 1b dargestellt. Im vollständig aufgeblasenen Zustand des Gassackes 10 ist die Motorhaube M im Bereich ihres hinteren Endes H um einen definierten Weg s gegenüber ihrer in Figur 1a dargestellten Ausgangslage angehoben. Diese Wegstrecke s definiert den Deformationsweg, der einer als Folge eines Unfalles auf die Motorhaube M aufprallenden Person zur Verfügung gestellt wird, so dass kontrolliert Aufprallenergie abgebaut werden kann und der unmittelbare Kontakt der aufprallenden Person mit hinter der Motorhaube M liegenden steifen Fahrzeugteilen, wie z. B. dem Motorblock, verhindert wird.

Die Motorhaube M muss hierzu einerseits hinreichend stabil sein, so dass sie mittels eines im Millisekundenbereich sehr schnell aufblasbaren Gassackes 10 angehoben werden kann, ohne beschädigt zu werden. Andererseits muss die Motorhaube M aber auch hinreichend nachgiebig sein, so dass sich eine aufprallende Person nicht schon aufgrund der Steifigkeit der Motorhaube M schwere Verletzungen zuzieht.

Unmittelbar nach dem Aufblasen des Gassackes 10 bildet dieser aufgrund des in dem Gassack 10 bestehenden Gasdruckes ein Element, welches die Motorhaube M stabil in der angehobenen Position hält und das selbst beim Aufprall einer Person auf die Motorhaube zunächst nur so geringförmig nachgibt, dass keine wesentliche Bewegung der Motorhaube M entgegen der Auslenkrichtung a der Motorhaube möglich ist. D.h., im Fall eines ersten Aufpralles eines Körperteiles der an dem Unfall beteiligten Person, z. B. des Oberkörpers, auf die Motorhaube M unmittelbar nach dem Auslenken der Motorhaube M durch Aufblasen des Gassackes 10 führt dieser Aufprall noch nicht dazu, dass die Motorhaube M entgegen der Auslenkrichtung a bewegt und hierdurch kontrolliert Energie abgebaut wird. Der entsprechende Deformationsweg s steht daher noch für einen weiteren Aufprall zur Verfügung.

Bei einem späteren, zweiten Aufprall wird eine Bewegung der Motorhaube M entgegen ihrer Auslenkrichtung a dadurch ermöglicht, dass der Gassack 10 Entlüftungsöffnungen aufweist, wie sie z. B. bei Airbagmodulen zum Schutz von Fahrzeuginsassen bekannt sind, durch die hindurch das aus dem Gasgenerator 12 in den Gassack 10 eingeströmte Gas wieder in die Umgebung abgelassen werden kann. Hierdurch nimmt der Druck innerhalb des Gassackes 10 ab, so dass bei einem späteren Aufprall, z. B. des Kopfes einer Person, auf die Motorhaube M ein erheblich geringerer Druck einer Bewegung der Motorhaube M entgegen der Auslenkrichtung a entgegenwirkt. Die Motorhaube M lässt sich dann unter der Kraftwirkung des Aufpralles entgegen der Auslenkrichtung a bewegen, wobei nun kontrolliert Aufprallenergie abgebaut und eine Verletzung des auf die Motorhaube M prallenden Kopfes verhindert wird.

In diesem Zusammenhang sei bemerkt, dass die Auslenkeinrichtung auch bei dem ersten Aufprall der Person auf die Motorhaube M mit ihrem Oberkörper immerhin noch eine zweite Hauptfunktion erfüllt, nämlich die Person vor einem unmittelbaren Kontakt mit unterhalb der Motorhaube M gelegenen steifen Fahrzeugteilen, wie z. B. dem Motorblock, zu schützen.

Im Ergebnis wird also mit der in den Figuren 1 a und 1 b dargestellten Anordnung eine auf die Motorhaube M aufprallende Person bei einem ersten Aufprall unmittelbar nach dem Aufblasen des Gassackes 10 durch das Anheben der Motorhaube M vor einem Kontakt mit unterhalb der Motorhaube M gelegenen, steifen Fahrzeugteilen geschützt. Bei einem späteren, zweiten Aufprall kommt es darüber hinaus (zusätzlich) noch zu einem kontrollierten Abbau von Aufprallenergie durch eine Bewegung der Motorhaube M entgegen der Auslenkrichtung a. Da bei einem unfallbedingten Aufprall einer Person auf die Motorhaube eines Kraftfahrzeugs in der Regel zunächst der Oberkörper und anschließend der Kopf auf die Motorhaube aufprallt, wird dem aufprallenden Kopf der größtmögliche Schutz geboten und insbesondere ein Abbau des Deformationsweges s schon vor dem Aufprall des Kopfes verhindert.

In einer Weiterbildung der in den Figuren 1a und 1b dargestellten Anordnung können die zum Ablassen von Gas aus dem Gassack 10 dienenden Entlüftungsöffnungen in ihrer Größe zeitlich gesteuert werden, so dass gezielt ein bestimmtes, vorgegebenes Zeitfenster zur Verfügung gestellt werden kann, in dem ein Abbau von Aufprallenergie durch Bewegung der Motorhaube M entgegen der Auslenkrichtung a möglich ist. Dabei kann beispielsweise auch vorgesehen sein, dass durch die bei einem ersten Aufprall auf die Motorhaube M und die Auslenkeinrichtung 1 wirkende Kraft die Größe der Entlüftungsöffnungen so verändert wird, dass ein bestimmtes vorgebbares Druckniveau für den innerhalb eines bestimmten Zeitraumes zu erwartenden zweiten Aufprall der Person (mit ihrem Kopf) zur Verfügung gestellt wird.

In Figur 2a ist in Abwandlung des in Figur 1a dargestellten Ausführungsbeispiels eine Anordnung zum Anheben der Motorhaube M dargestellt, wobei die Auslenkeinrichtung 2 anstelle eines Gassackes einen in einem Zylinder 20 geführten Kolben 21 umfasst, der durch ein mittels eines Gasgenerators 22 erzeugtes Gas angehoben werden kann und dann gemäß Figur 2b über ein Kraftübertragungselement 25 derart auf die Motorhaube M einwirkt, dass diese entlang einer Auslenkrichtung a um eine definierte Wegstrecke s angehoben wird.

Auch hier kann der Druck, mit dem die Auslenkeinrichtung 2 auf die Motorhaube M im Bereich ihres hinteren Endes H einwirkt, dadurch variiert werden, dass aus der Kolben-Zylinder-Anordnung 20, 21 Gas abgelassen wird. Hierdurch lässt sich in gleicher Weise wie bei dem anhand der Figuren 1a und 1b dargestellten Ausführungsbeispiel erreichen, dass unmittelbar nach dem Auslenken der Motorhaube M mittels des Kolbens 21 zunächst noch keine Bewegung der Motorhaube M entgegen der Auslenkrichtung a möglich ist, während zu einem späteren Zeitpunkt, nach dem Ablassen von Gas aus der Auslenkeinrichtung 2 die Motorhaube M entgegen der Auslenkrichtung a bewegt werden kann, wobei der Kolben 21 wieder ein Stück weit in den Zylinder 20 hinein verschoben wird.

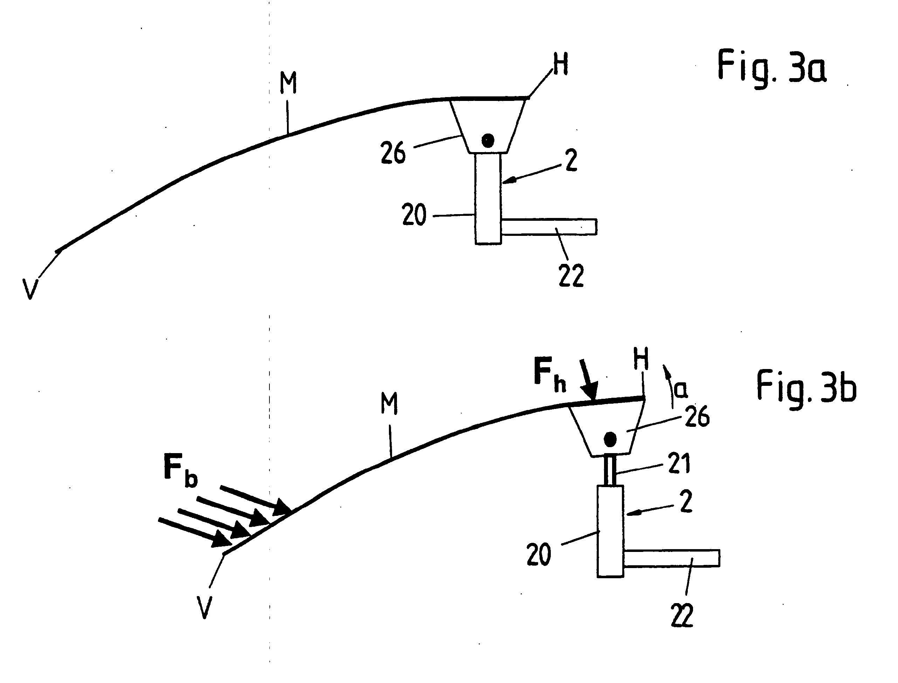

In Figur 3a ist eine Abwandlung der Anordnung aus Figur 2a dargestellt, wonach die aus einem Zylinder 20 mit Kolben 21 (vergleiche Figur 3b) bestehende Auslenkeinrichtung 2 mit der Motorhaube M im Bereich ihres hinteren, fahrgastzellenseitigen Endes H über ein Kraftübertragungselement in Form eines Deformationselementes 26 verbunden ist. Dieses Deformationselement 26 ist derart elastisch deformierbar ausgebildet, dass es beim Aufprall einer Person auf die Motorhaube M in der Umgebung des Deformationselementes 26 nachgibt und so eine Bewegung der Motorhaube M entgegen der Richtung a zulässt, entlang der sie zuvor gemäß Figur 3b durch Anheben des Kolbens 21 der Auslenkeinrichtung 2 angehoben worden war.

Das Deformationselement 26 kann zusätzlich oder alternativ zu der anhand der Figuren 2a und 2b beschriebenen zeitlichen Steuerung der Auslenkeinrichtung 2 vorgesehen sein. D.h., das Deformationselement 26 ermöglicht eine Bewegung der Motorhaube M entgegen der Auslenkeinrichtung a auch dann, wenn der Kolben 21 sich bei einem Aufprall eines Körperteiles auf die Motorhaube M nicht in den Zylinder 20 zurückschieben lässt. Wichtig ist aber, dass der Aufprall in der Umgebung des Deformationselementes 26 im Bereich des hinteren Endes H der Motorhaube M erfolgt, also in dem Bereich, in dem bei einem Unfall häufig der Kopf einer Person auftrifft und dann mit einer entsprechenden Kraft Fₕ auf die Motorhaube M einwirkt.
Die Ausbildung des Kraftübertragungselementes (26) als Deformationselement ist insbesondere dann von Bedeutung, wenn die Auslenkeinrichtung (2) nicht reversibel ausgebildet ist, der Kolben (21) also unter der Wirkung der beim Aufprall des Kopfes auftretenden Kraft (Fₕ) nicht wieder in den zugeordneten Zylinder 20 zurück verschoben werden kann.

Von einem Aufprall im Bereich des vorderen Endes V der Motorhaube M herrührende Kräfte F_{b}, die beispielsweise von dem Aufprall der Beine einer Person herrühren, führen demgegenüber nicht zu einer Verformung des Deformationselementes 26 und damit nicht zu einer Bewegung der Motorhaube M entgegen ihrer Auslenkrichtung a. Dies ist u.a. eine Folge der gekrümmten Ausbildung der Motorhaube M.

Mit dem in den Figuren 3a und 3b dargestellten Ausführungsbeispiel lässt sich also (gegebenenfalls zusätzlich zu der anhand der Figuren 1 a bis 2b beschriebenen zeitlichen Steuerung) eine räumliche Steuerung der Auslenkeinrichtung 2 in der Weise erreichen, dass nach dem Aufstellen der Motorhaube M eine Bewegung entgegen der Auslenkrichtung a und der Abbau des beim Auslenken zur Verfügung gestellten Deformationsweges nur dann stattfindet, wenn der Aufprall in der Umgebung der Auslenkeinrichtung 2 am hinteren Ende H der Motorhaube M stattfindet. Da in dieser Gegend häufig der Kopf eines am Unfall beteiligten Fußgängers oder Radfahrers aufprallt, dient dies wiederum einem besonderen Schutz des Kopfes der entsprechenden Person.

Weiterhin kann vorgesehen sein, dass die Kraft-Weg-Kennlinie des Deformationselementes 26 anisotrop ist, etwa indem eine besonders starke Verformung des Deformationselementes 26 dann möglich ist, wenn die entsprechende Kraft Fₕ im Wesentlichen senkrecht zur Motorhaube M wirkt, wie dies bei einem Kopfaufprall häufig der Fall ist.

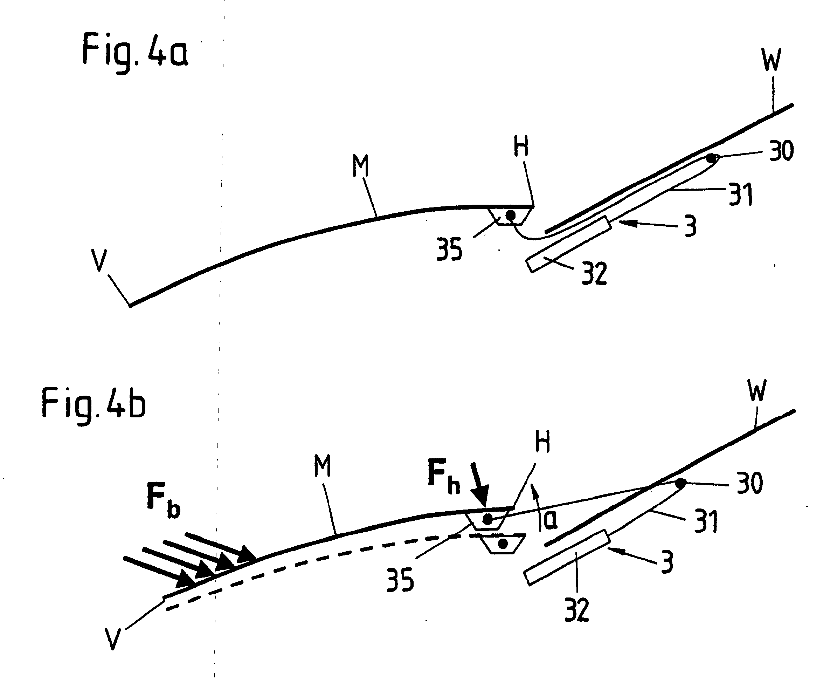

Bei dem in Figur 4a gezeigten Ausführungsbeispiel einer Anordnung zum Anheben der Motorhaube M im Bereich ihres hinteren, der Windschutzscheibe W zugewandten Endes H umfasst die Auslenkeinrichtung 3 ein Zugmittel 31, das mit einem Ende an einem an der Motorhaube M vorgesehenen Kraftübertragungselement 35 angreift und mit dem anderen Ende in einer Spannvorrichtung 32 angeordnet ist. Das flexible Zugmittel 31 kann beispielsweise durch ein Seil gebildet werden und wird zwischen seinen beiden Enden mindestens einmal mittels eines Umlenkelementes 30 umgelenkt.

In einem Crash-Fall wird die Spannvorrichtung 32 aktiviert, die dann beispielsweise mittels einer pyrotechnischen Ladung oder mittels eines elektrischen Antriebs eine Zugkraft auf das Zugmittel 31 ausübt, so dass dieses gestrafft wird, wobei die Motorhaube M gemäß Figur 4b im Bereich ihres hinteren Endes H angehoben wird. Beim Anheben der Motorhaube M im Bereich ihres hinteren Endes H verschwenkt diese um einen an ihrem vorderen Ende V gebildeten Drehpunkt im Haubenschloss. Der Weg, um den die Motorhaube M im Bereich ihres hinteren Endes H verglichen mit ihrer in Figur 4b gestrichelt dargestellten Ausgangsposition angehoben wird, hängt dabei von der Lage des Umlenkelementes 30 ab. Die Kraft, mit der die Motorhaube M in ihrer angehobenen Position gehalten wird, hängt wiederum von der Spannung des Zugmittels 31 ab, die durch die Zugvorrichtung 32 erzeugt wird.

Bei einem Aufprall des Kopfes einer Person auf die Motorhaube M im Bereich von deren hinterem Ende H als Folge eines Unfalles kann die Motorhaube M aufgrund der hierbei wirkenden Aufprallkraft Fₕ entgegen der Wirkung der Spannung des Zugmittels gegen die Auslenkrichtung a bewegt werden, so dass kontrolliert Aufprallenergie abgebaut wird. Das Ausmaß der Bewegung hängt dabei von dem Ort des Aufpralls im Bereich des hinteren Endes H der Motorhaube M sowie von der Richtung der hiermit verbundenen Kraft Fₕ ab.

Aufprallkräfte F_{b}, die durch den Aufprall eines Körperteiles, wie z. B. der Beine, im Bereich des vorderen Endes V der Motorhaube M auftreten, bewirken demgegenüber keine Bewegung der Motorhaube M entgegen der Auslenkrichtung a. Auch hierbei ist wiederum die Krümmung der Motorhaube M von Bedeutung. Gegebenenfalls kann die Spannung unter der das Zugmittel 31 steht, auch zeitlich variiert werden, etwa mit zunehmender Zeitdauer nach Aktivierung der Auslenkeinrichtung 3 vermindert werden.

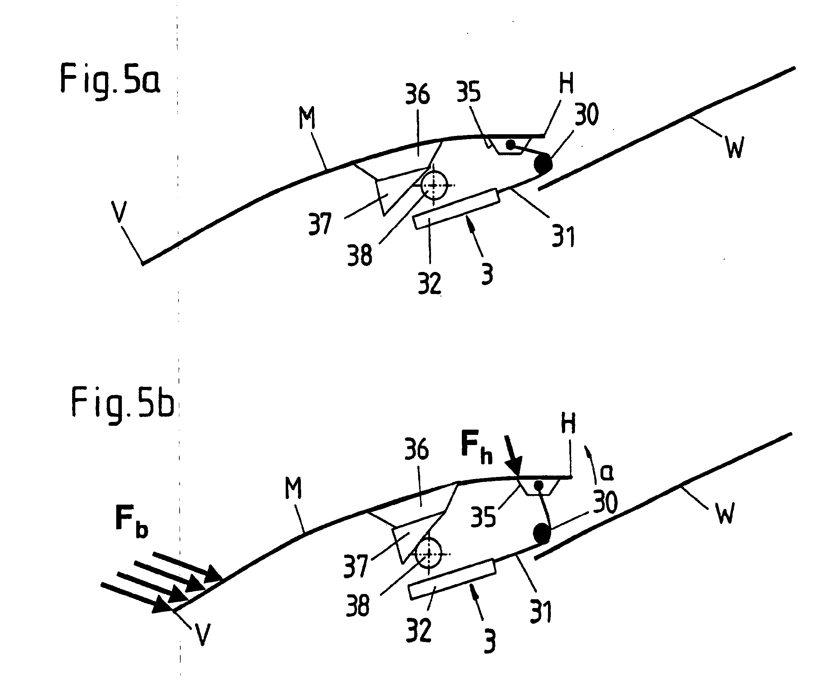

In Figur 5a ist eine Weiterbildung des Ausführungsbeispiels aus Figur 4a dargestellt, wobei zum Anheben der Motorhaube M zusätzlich eine schiefe Ebene 37 vorgesehen ist, die über ein Deformationselement 36 mit der Motorhaube M verbunden ist und die mit einer ortsfest an einem tragenden Teil des Kraftfahrzeugs angeordneten rotationssymmetrischen Element 38 zusammenwirkt. Durch die Ausbildung der schiefen Ebene 37, z.B. deren Länge und Neigung, wird der Weg festgelegt, um den die Motorhaube M beim Aktivieren der Zugvorrichtung 32 durch Straffung des Zugmittels 31 angehoben wird, vergleiche Figur 5b. Da die schiefe Ebene 37 über ein Deformationselement 36 mit der Motorhaube M verbunden ist, wird die anhand der Figuren 4a und 4b beschriebene Möglichkeit einer Bewegung der Motorhaube M entgegen der Auslenkrichtung a unter der Wirkung entsprechender Aufprallkräfte nicht behindert.

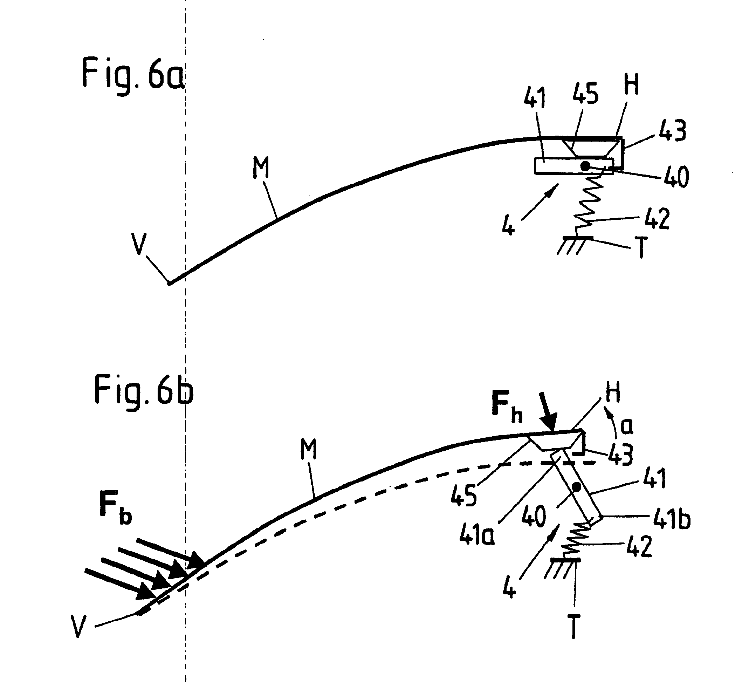

Bei der in Figur 6a dargestellten Anordnung zum Anheben der Motorhaube M im Bereich ihres hinteren Endes H in einem Crash-Fall weist die Auslenkvorrichtung 4 einen um einen Drehpunkt 40 schwenkbar gelagerten Hebel 41 auf, der an einem Ende 41 b (vergleiche Figur 6b) mit einem Federelement 42 gekoppelt ist. Dieses als Zugfeder ausgebildete Federelement 42 ist andererseits an einem tragenden Karosserieteil T festgelegt und übt auf den Schwenkhebel 41 eine Kraft aus, die die Tendenz hat, diesen um den Drehpunkt 40 zu verschwenken, wobei die Motorhaube M im Bereich ihres hinteren Endes H angehoben würde. Diese Schwenkbewegung wird jedoch durch einen Haken 43 verhindert, der an dem Schwenkhebel 41 angreift und der die durch das Federelement 42 erzeugbare Schwenkbewegung verhindert.

Prallt als Folge eines Unfalles eine Person mit einem Körperteil im Bereich des vorderen Endes V auf die Motorhaube M auf, so bewirken die hierbei entstehenden Aufprallkräfte F_{b} eine Entriegelung des Hakens 43, der hierdurch den Schwenkhebel 41 freigibt. Dieser verschwenkt dann unter der Wirkung des Federelementes 42 um seine Drehachse 40 und wirkt dabei mit seinem dem Federelement 42 abgewandten Ende 41 a auf ein an der Motorhaube M im Bereich ihres hinteren, fahrgastzellenseitigen Endes H angeordnetes Kraftübertragungselement 45 ein, so dass die Motorhaube M dort angehoben wird.

Der Schwenkhebel 41 ist auch in seiner in Figur 6b dargestellten Endposition nach dem Anheben der Motorhaube M noch derart geneigt, dass er durch eine im Bereich des hinteren Endes H der Motorhaube M wirkende Aufprallkraft Fₕ, die z. B. vom Aufprall des Kopfes einer Person herrühren kann, derart entgegen der Wirkung des Federelementes 42 verschwenkt wird, dass die Motorhaube M entgegen ihrer Auslenkrichtung a abgesenkt werden kann. Die Federkonstante des Federelementes 42 bestimmt dabei die zur Bewegung der Motorhaube M erforderliche Aufprallkraft. Die Neigung des Schwenkhebels 41 im ausgelenkten Zustand der Auslenkeinrichtung 4 legt demgegenüber die Richtungen der Kraft Fₕ fest, die ein Zurückschwenken des Hebels 41 auslösen kann. Je weniger der Schwenkhebel 41 gegenüber der Senkrechten geneigt ist, desto kleiner ist der Richtungsbereich, innerhalb dessen die Richtung der Kraft Fₕ liegen muss, um ein Zurückschwenken des Hebels 41 auszulösen.

Insgesamt umfassen die bei dieser Auslenkeinrichtung 4 wichtigen, wählbaren Parameter die Federkonstante des Federelementes 42, die Längen der beiden Hebelarme des Schwenkhebels 41, die Masse der Motorhaube M sowie die zum Anheben der Motorhaube M benötigte Zeitdauer.

Bei der in den Figuren 6a und 6b dargestellten Anordnung wird also durch einen ersten Aufprall eines Körperteiles einer Person auf die Motorhaube M überhaupt erst die Auslenkeinrichtung 4 freigegeben, die sodann ein Anheben der Motorhaube M bewirkt und hierdurch einen Deformationsweg für einen späteren zweiten Aufprall insbesondere des Kopfes der entsprechenden Person zur Verfügung stellt.

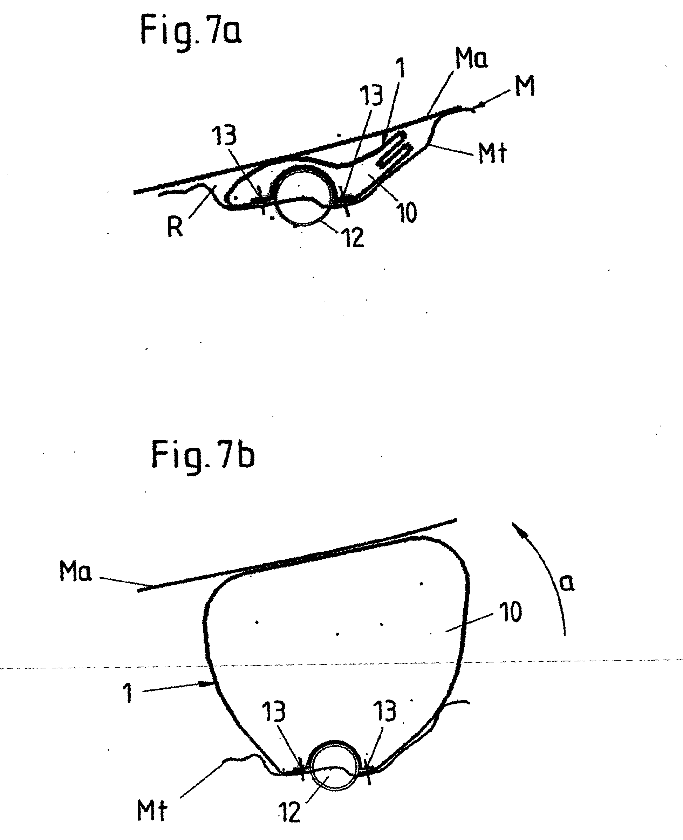

In Figur 7a ist eine Abwandlung des Ausführungsbeispiels aus Figur 1a gezeigt, bei der die einen aufblasbaren Gassack 10 aufweisende Auslenkeinrichtung 1 zwischen einer Trägerstruktur Mt und der äußeren Haut (Außenseite Ma) der Motorhaube angeordnet ist. D. h., die Motorhaube M ist vorliegend zweiteilig ausgebildet mit einer vergleichsweise stabilen Trägerstruktur Mt und einer das äußere Design der Motorhaube bestimmenden Außenseite Ma. Zwischen diesen Bestandteilen der Motorhaube M ist gemäß Figur 7a der Gassack 10 im gefalteten Zustand angeordnet, wobei die Trägerstruktur Mt der Motorhaube M eine entsprechende Vertiefung R zur Aufnahme des Gassackes 10 sowie eines in den Gassack 10 ragenden Gasgenerators 12 zum Aufblasen des Gassackes aufweist. Der Gassack 10 und der Gasgenerator 12 sind gemeinsam mittels geeigneter Befestigungselemente 13 (z. B. in Form von Schrauben oder Nieten) an der Trägerstruktur Mt der Motorhaube M befestigt.

Wird durch einen Sensor ein unmittelbar bevorstehender oder ein bereits eingetretener Unfall detektiert, so wird der Gassack 10 mittels des Gasgenerators 12 aufgeblasen und hierdurch, wie anhand Figur 7b erkennbar, die Außenseite Ma der Motorhaube M von der Trägerstruktur Mt abgehoben. Hierdurch wird wiederum ein Deformationsweg für einen auf die Außenseite Ma der Motorhaube M aufprallenden Fußgänger oder Fahrradfahrer zur Verfügung gestellt. Die Steuerung des Gassackes 10 kann in der gleichen Weise erfolgen wie oben anhand der Figuren 1a und 1b beschrieben. D. h., durch gezieltes Ablassen von Gas aus dem Gassack 10 nach dem Anheben der Außenseite Ma der Motorhaube M kann das Druckniveau innerhalb des Gassackes 10 und damit auch die Kraft, mit der der Gassack 10 auf die Außenseite Ma der Motorhaube M einwirkt, zeitlich variiert werden. Dies erfolgt insbesondere im Hinblick darauf, um zum Zeitpunkt eines wahrscheinlichen Aufpreis des Kopfes einer am Unfall beteiligten, außerhalb des Kraftfahrzeugs befindlichen Person ein solches Druckniveau einzustellen, das eine Bewegung der Außenseite Ma der Motorhaube M entgegen ihrer Auslenkrichtung zulässt.

Aufgrund der vergleichsweise geringen Steifigkeit der Außenseite Ma der Motorhaube M verglichen mit einer kompletten, aus Trägerstruktur Mt und Außenseite Ma bestehenden Motorhaube, muss der Gassack 10 ein vergleichsweise großes Volumen aufweisen, um die Außenseite Ma der Motorhaube M großflächig abzustützen. Dies ermöglicht auch eine Unterteilung des Gassackes 10 in mehrere Kammern, von denen die einem aufprallenden Oberkörper zuzuordnenden Kammern zuerst und mit einem vergleichsweise hohen Innendruck gefüllt werden, während die einem aufprallenden Kopf zugeordneten (im Bereich des hinteren Endes der Motorhaube M liegenden) Kammern daran anschließend und mit einem vergleichsweise geringeren Innendruck gefüllt werden. Dies kann beispielsweise mittels Überströmöffnungen gewährleistet werden, durch die hindurch Gas aus den dem Oberkörper zugeordneten Kammern in die dem Kopf zugeordneten Kammern strömt. Alternativ können mehrere Gassäcke für die unterschiedlichen Aufprallbereiche vorgesehen sein, die zeitversetzt und mit unterschiedlichen Innendrücken gefüllt werden.

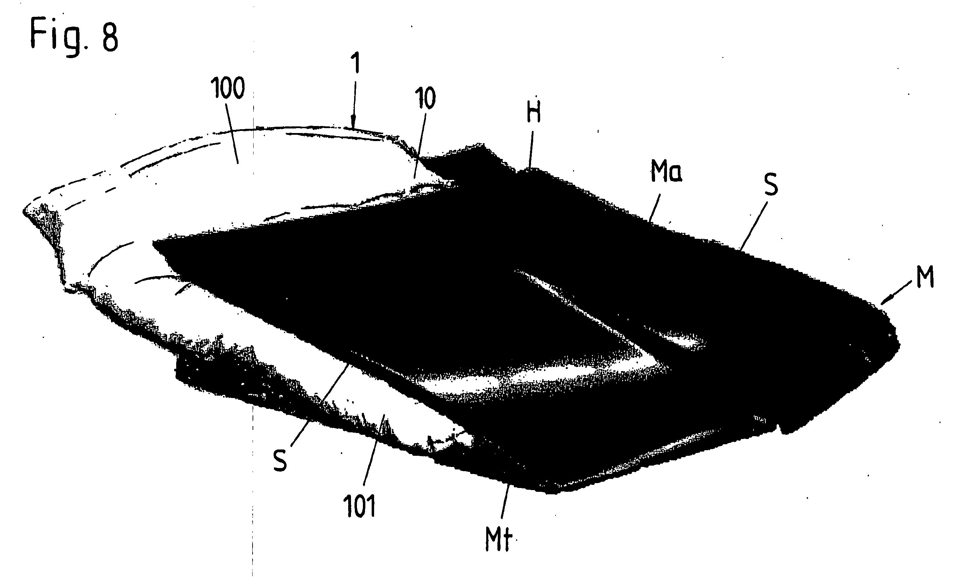

Bei dem in Figur 8 dargestellten Ausführungsbeispiel dient wiederum ein Gassack 10 als Auslenkeinrichtung 1 zum Anheben der Außenseite Ma einer Motorhaube M gegenüber deren Trägerstruktur Mt zum Schutz einer außerhalb des Kraftfahrzeugs befindlichen Person bei einem Unfall. Der Gassack stützt sich dabei im aufgeblasenen Zustand einerseits an der Trägerstruktur Mt ab und wirkt gleichzeitig derart auf die Außenseite Ma der Motorhaube M ein, dass diese ausgelenkt ist.

Der Gassack 10 ist dabei so ausgebildet, dass er mit einem hinteren Abschnitt 100 hinter dem hinteren Ende H der Motorhaube M hervorragt und mit einem weiteren Abschnitt 101 seitlich neben der Motorhaube M hervorragt. Ein entsprechender seitlich hervorragender Abschnitt des Gassackes 10 kann auch auf der anderen, gegenüberliegenden Seite der Motorhaube M vorgesehen sein. Mit diesen neben der Motorhaube herausragenden Abschnitten 100, 101 des Gassackes 10 können zusätzliche Bereiche der Fahrzeugkarosserie, wie z.B. Kotflügel, die A-Säulen sowie der Rahmen einer Fensterscheibe abgedeckt werden. Hierdurch wird das Verletzungsrisiko für eine außerhalb des Kraftfahrzeugs befindliche Person weiter verringert.

Gleichzeitig wird bei dieser Ausbildung des Gassackes 10, der die Außenseite Ma der Motorhaube M im aufgeblasenen Zustand sowohl im Bereich ihres hinteren Endes H als auch im Bereich ihrer Längsseiten S abstützt, eine besonders homogene Aufprallfläche für eine aufprallende Person geschaffen, so dass über die gesamte Motorhaube M gleichmäßig ein vergleichsweise weiches Auffangen des Kopfes, des Oberkörpers, oder anderer Körperteile einer aufprallenden Person möglich ist.

Die Anordnung gemäß Figur 8 lässt sich in gleicher Weise auch auf den Fall anwenden, in dem nicht nur die Außenseite Ma der Motorhaube M, sondem die gesamte Motorhaube M durch eine Auslenkeinrichtung 1 in Form eines Gassackes 10 angehoben wird.

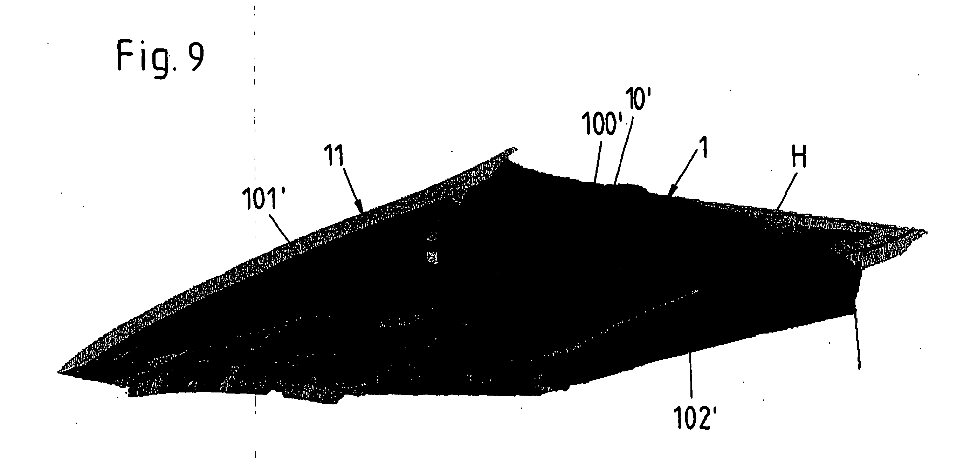

Bei dem Ausführungsbeispiel gemäß Figur 9 wird bei einem Unfall die Motorhaube M insgesamt durch eine Auslenkeinrichtung 1 in Form eines im wesentlichen U-förmigen Gassackes 10' angehoben, der sich mit seinem Basisabschnitt 100' entlang des hinteren Endes H der Motorhaube M und mit seinen beiden vom Basisbereich 100' abgewinkelten Schenkeln 101', 102' entlang der Längsseiten S der Motorhaube M unterhalb dieser erstreckt. Die Motorhaube M wird also im angehobenen Zustand an drei Seiten durch den Gassack 10' unterstützt.

Auch bei dieser Anordnung werden im angehobenen Zustand der Motorhaube M auf der gesamten Oberfläche der Motorhaube M homogene Bedingungen zur Verfügung gestellt, um eine auf die Motorhaube M aufprallende Person, unabhängig von dem Ort des Aufpralls an der Motorhaube M, möglichst weich aufzufangen, indem die Motorhaube M entgegen ihrer Auslenkrichtung bewegt wird.

Bei den anhand der Figuren 1a bis 9 dargestellten Ausführungsbeispielen einer Anordnung zum Anheben einer Motorhaube zum Schutz einer außerhalb des Kraftfahrzeugs befindlichen Person wird die Motorhaube M jeweils um ihr vorderes Ende V (z.B. um eine vordere Schlossbaugruppe) verschwenkt und dabei insbesondere im Bereich ihres hinteren Endes H angehoben. Andererseits ist es zum Aufklappen der Motorhaube in einem Reparaturfall, zum Ölwechsel oder aus anderen Gründen erforderlich, die Motorhaube H auch um ihr hinteres Ende verschwenken zu können. Das heißt, die Motorhaube M muss jeweils einerseits im Bereich ihres hinteren Endes H schwenkbar an der Fahrzeugkarosserie angelenkt sein, um diese zu Reparaturzwecken aufklappen zu können, und sie muss andererseits im Bereich ihres hinteren Endes H angehoben werden können, um die erfindungsgemäße Schutzfunktion bei einem Unfall unter Beteiligung einer außerhalb des Kraftfahrzeugs befindlichen Person zu ermöglichen.

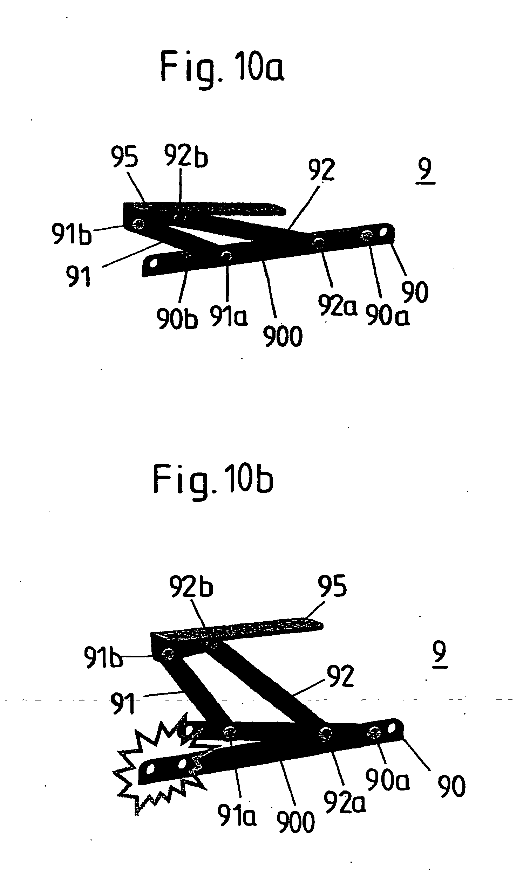

Ein Scharnier, mit dem diese Vorgaben erfüllt werden können, ist in Figur 10a dargestellt. Das Scharnier 9 weist ein Basisteil 90 auf, das an der Fahrzeugkarosserie festgelegt wird, sowie ein bezüglich des Basisteils 90 verschwenkbares oberes Teil 95, das mit einer Motorhaube verbindbar ist. Das obere Teil 95 ist mit dem Basisteil 90 über zwei Verstellhebel 91, 92 verbunden, die im Bereich ihrer unteren Enden jeweils über Gelenkpunkte 91a, 92a an einem mit dem Basisteil 90 verbundenen Halteelement 900 und im Bereich ihrer oberen Enden jeweils über weitere Gelenkpunkte 91 b, 92b mit dem oberen Teil 95 des Haubenscharniers 9 gelenkverbunden sind. Hierdurch lässt sich das obere Teil 9 mittels der Verstellhebel 91, 92 bezüglich des Baisteiles 90 verschwenken, wobei die Motorhaube um ihr hinteres Ende verschwenkt wird, so dass das vordere Ende der Motorhaube nach oben klappt und der von der Motorhaube verdeckte Bereich des Fahrzeugs zugänglich wird.

Das Halteelement 900, an dem die beiden Verstellhebel 91, 92 mit ihren unteren Enden schwenkbar angelenkt sind, ist mittels zweier Befestigungselemente 90a, 90b, z.B. in Form von Nieten, mit dem Basisteil 90 verbunden. Die Befestigungselemente 90a, 90b des längserstreckten Halteelementes 900 sind dabei an den beiden längsseitigen Enden des Halteelementes vorgesehen. Das - bei Anordnung des Haubenschamiers 9 in einem Kraftfahrzeug im Bereich des hinteren Endes einer Motorhaube - in Fahrtrichtung vordere Befestigungselement 90b ist derart ausgebildet bzw. weist einen derartigen Schwächungsbereich auf, dass die vordere Verbindung zwischen dem Basisteil 9 und dem Halteelement 900 gelöst werden kann, um das hintere Ende der Motorhaube anzuheben. Denn nach dem Lösen des vorderen Befestigungselementes 90b wirkt das hintere Befestigungselement 90a als Gelenk, so dass sich das Halteelement 900 bezüglich des Basisteiles 9 um dieses hintere Gelenk 90a verschwenken lässt. Dies ist in Figur 10b dargestellt. Das Halteelement 900 bildet dann mit den beiden Verstellhebeln 91, 92 eine Hebelanordnung, die ein im wesentlichen vertikales Anheben des hinteren Endes der entsprechenden Motorhaube zulässt, wie es bei den in den Figuren 1a bis 11 dargestellten Anordnungen erforderlich ist.

Die in den Figuren 10a und 10b dargestellte Ausbildung eines Haubengelenkes bzw. Haubenschamieres 9 basiert also auf dem Prinzip, dass durch das Einwirken bestimmter, vorgebbarer Kräfte das Haubenschamier derart modifiziert wird, dass ein Anheben des hinteren Endes einer Motorhaube (die über das Haubenschamier an der Fahrzeugkarosserie angelenkt ist) ermöglicht wird. Die hierfür erforderlichen Kräfte können dabei gemäß einer Alternative durch die zum Auslenken der Motorhaube M verwendete Auslenkeinrichtung 1 (vgl. Figuren 1a bis 11) selbst aufgebracht werden. Nach einer anderen Ausführungsform kann eine separate Einrichtung vorgesehen sein, die speziell auf einen bestimmten Abschnitt des Haubenscharnieres 9 einwirkt, um dieses derart zu modifizieren, dass das Anheben des hinteren Haubenendes der Motorhaube ermöglicht wird.

Selbstverständlich ist es auch denkbar, durch Zerstörung des Haubenschamieres 9 die Motorhaube im Bereich ihres hinteren Endes vollständig von der Fahrzeugkarosserie zu entkoppeln. Hierzu könnten beispielsweise die Verstellhebel 91, 92 entweder von dem Basisteil 90 oder von dem oberen Teil 95 abgekoppelt werden. Die in den Figuren 12a und 12b dargestellte Ausführungsform eines Haubenschamieres, das zum Anheben des hinteren Endes einer Motorhaube lediglich modifiziert nicht aber zerstört wird, hat den Vorteil, dass das Haubenscharnier 9 gleichzeitig dazu dienen kann, das Anheben der Motorhaube M mittels der Auslenkeinrichtung (nach Art eines Fangbandes) zu begrenzen, so dass ein zu starkes Anheben vermieden wird. Denn dies könnte wiederum dazu führen, dass eine aufprallende Person an der hinteren Kante der Motorhaube aufschlägt, was die Verletzungsgefahr erhöhen würde.

## Patentansprüche

1. Anordnung zum Auslenken eines durch eine Klappe gebildeten Teiles der Außenhaut eines Kraftfahrzeugs, insbesondere einer Motorhaube oder einer Kofferraumklappe, in einem Crash-Fall, um beim Aufprall einer außerhalb des Kraftfahrzeugs befindlichen Person auf den ausgelenkten Teil durch eine Bewegung des Teiles entgegen der Auslenkrichtung Aufprallenergie abzubauen, mit einer Einrichtung zum Auslenken des Teiles der Außenhaut, die an mindestens einer Stelle des Teiles angreift und die bei dem Aufprall einer Person auf das Teil eine Bewegung des Teiles entgegen der Auslenkrichtung zulässt, wobei die Angriffsstelle der Auslenkeinrichtung (1, 2, 3, 4) im Bereich eines der Fahrgastzelle zugeordneten Endes (H) des Teiles (M) vorgesehen ist,
**dadurch gekennzeichnet,**
**dass** die Auslenkeinrichtung (1, 2, 3, 4) ein Element (10; 10'; 20, 21; 26; 31; 43) aufweist, das bei einem Aufprall einer Person auf das ausgelenkte Teil (M), bei dem die Aufprallkräfte (F_{b}, Fₕ) entgegen der Auslenkrichtung wirken, eine Bewegung des Teiles (M) der Außenhaut entgegen der Auslenkrichtung (a) entgegenwirken kann, um sie zu verhindem, und dass die Auslenkeinrichtung (1, 2, 3, 4) in Abhängigkeit von der Zeit, dem Ort und/oder der Richtung des Aufpralles derart gesteuert ist, dass in Abhängigkeit von dem Zeitpunkt des Aufpralles und/oder dem Ort des Aufpralles und/oder der Richtung des Aufpralles auf den ausgelenkten Teil (M) der Außenhaut die Auslenkeinrichtung (1, 2, 3, 4) eine Bewegung des Teiles (M) der Außenhaut entgegen der Auslenkrichtung (a) zulässt oder einer solchen Bewegung entgegenwirkt, um sie zu verhindem.

2. Anordnung nach Anspruch 1, **dadurch gekennzeichnet, dass** die Auslenkeinrichtung (1, 2, 3, 4) erst ab einem vorgebbaren Zeitpunkt nach dem Auslenken des Teiles (M) der Außenhaut eine Bewegung des Teiles (M) entgegen der Auslenkrichtung (a) zulässt.

3. Anordnung nach Anspruch 1 oder 2, **dadurch gekennzeichnet, dass** die Auslenkeinrichtung (1, 2) den Teil (M) der Außenhaut unter der Wirkung des Druckes eines Fluides, insbesondere eines Gases, auslenkt.

4. Anordnung nach Anspruch 3, **dadurch gekennzeichnet, dass** der Druck des Fluides zeitlich gesteuert ist und vorzugsweise nach dem Auslenken des Teiles (M) der Außenhaut abnimmt.

5. Anordnung nach Anspruch 4, **dadurch gekennzeichnet, dass** der Druck des Fluides, welches auf den ausgelenkten Teil (M) der Außenhaut einwirkt, durch Ablassen von Teilen des Fluides vermindert werden kann.

6. Anordnung nach Anspruch 5, **dadurch gekennzeichnet, dass** Entlüftungsöffnungen zum Ablassen von Fluid vorgesehen sind.

7. Anordnung nach Anspruch 6, **dadurch gekennzeichnet, dass** der Austrittsquerschnitt der Entlüftungsöffnungen steuerbar ist.

8. Anordnung nach einem der vorhergehenden Ansprüche, **dadurch gekennzeichnet, dass** die Auslenkeinrichtung (1, 2, 3) pyrotechnisch auslösbar ist.

9. Anordnung nach einem der Ansprüche 3 bis 7 und Anspruch 8, **dadurch gekennzeichnet, dass** der Druck pyrotechnisch erzeugt wird.

10. Anordnung nach einem der vorhergehenden Ansprüche, **dadurch gekennzeichnet, dass** die Auslenkeinrichtung (1, 2) ein mit Fluid befüllbares Element (10, 21) umfasst, dass beim Befüllen auf den Teil (M) der Außenhaut einwirkt.

11. Anordnung nach einem der vorhergehenden Ansprüche, **dadurch gekennzeichnet, dass** die Auslenkeinrichtung (2) einen Kolben (21) umfasst, der auf den Teil (M) der Außenhaut einwirken kann.

12. Anordnung nach Anspruch 3 und Anspruch 10 oder 11, **dadurch gekennzeichnet, dass** das Fluid zum Befüllen des befüllbaren Elementes (10) oder zum Bewegen des Kolbens (21) dient.

13. Anordnung nach einem der vorhergehenden Ansprüche, **dadurch gekennzeichnet, dass** die Auslenkeinrichtung derart verriegelbar ist, dass sie keine Bewegung des Teiles (M) der Außenhaut entgegen der Auslenkrichtung (a) zulässt und dass die Verriegelung durch den Aufprall eines Körperteiles einer Person auf den Teil (M) der Außenhaut lösbar ist, so dass bei einem weiteren Aufprall eine Bewegung des Teiles entgegen der Auslenkrichtung (a) erfolgt.

14. Anordnung nach Anspruch 13, **dadurch gekennzeichnet, dass** zur Verriegelung ein Haken vorgesehen ist.

15. Anordnung nach einem der vorhergehenden Ansprüche, **dadurch gekennzeichnet, dass** die Auslenkeinrichtung (2, 3, 4) nur bei dem Aufprall eines Körperteiles einer Person innerhalb eines bestimmten Bereiches des Teiles (M) der Außenhaut entgegen der Auslenkrichtung (a) bewegbar ist.

16. Anordnung nach Anspruch 15, **dadurch gekennzeichnet, dass** der Bereich die Stelle des Teiles (M) umgibt, an dem die Auslenkeinrichtung (2, 3, 4) angreift.

17. Anordnung nach einem der vorhergehenden Ansprüche, **dadurch gekennzeichnet, dass** die Auslenkeinrichtung über eine elastisch oder plastisch deformierbares Element (10; 20, 21; 26; 42) an dem Teil (M) der Außenhaut angreift.

18. Anordnung nach Anspruch 16 und 17, **dadurch gekennzeichnet, dass** das elastisch oder plastisch deformierbare Element (10; 20, 21; 26; 31; 42) bei einem Aufprall einer Person auf den Teil (M) der Außenhaut in der Umgebung dieses Elementes (10; 20, 21; 26; 31; 42) eine derartige Bewegung ausführt, dass der Teil (M) der Außenhaut sich entgegen der Auslenkrichtung (a) bewegt.

19. Anordnung nach Anspruch 17 oder 18, **dadurch gekennzeichnet, dass** das Deformationselement durch ein federelastisches Element (26, 42) gebildet wird.

20. Anordnung nach Anspruch 17 oder 18, **dadurch gekennzeichnet, dass** das Deformationselement durch ein flexibles Koppelelement (31) zwischen der Auslenkeinrichtung (3) und dem Teil (M) der Außenhaut, z. B. in Form eines flexiblen Zugmittels, gebildet wird.

21. Anordnung nach Anspruch 17 oder 18, **dadurch gekennzeichnet, dass** das Deformationselement durch ein teleskopierbares Element (20,21) gebildet wird.

22. Anordnung nach einem der vorhergehenden Ansprüche, **dadurch gekennzeichnet, dass** die Auslenkeinrichtung (1, 2, 3, 4) zumindest teilweise reversibel ausgebildet ist, so dass eine Bewegung des Teiles (M) der Außenhaut entgegen der Auslenkrichtung (a) durch eine Bewegung von Elementen der Auslenkeinrichtung (1, 2, 3, 4) ermöglicht wird, die der Bewegung beim Auslenken des Teiles (M) entgegengesetzt ist.

23. Anordnung nach einem der vorhergehenden Ansprüche, **dadurch gekennzeichnet, dass** die Auslenkeinrichtung (2, 3, 4) nur beim Aufprall eines Körperteiles einer Person auf den Teil (M) der Außenhaut innerhalb eines bestimmten Richtungsbereiches entgegen der Auslenkrichtung (a) bewegbar ist.

24. Anordnung nach einem der Ansprüche 17, bis 21 und Anspruch 23, **dadurch gekennzeichnet, dass** das Deformationselement (20, 21; 26) nur bei einem Aufprall mit einer Richtung innerhalb des vorgegebenen Richtungsbereiches deformierbar ist.

25. Anordnung nach Anspruch 23, **dadurch gekennzeichnet, dass** mindestens ein zum Auslenken des Teiles (M) der Außenhaut bewegbares Element (21, 41) der Auslenkeinrichtung (2, 4) derart ausgebildet und/oder angeordnet ist, dass die Auslenkeinrichtung (2, 4) nur bei einem Aufprall innerhalb des vorgegebenen Richtungsbereiches eine Bewegung des Teiles (M) entgegen der Auslenkrichtung (a) zulässt.

26. Anordnung nach einem der vorhergehenden Ansprüche, **dadurch gekennzeichnet, dass** die Auslenkeinrichtung (4) einen Hebelmechanismus zum Auslenken des Teiles (M) der Außenhaut aufweist.

27. Anordnung nach einem der vorhergehenden Ansprüche, **dadurch gekennzeichnet, dass** die Auslenkeinrichtung (3) ein beweglich geführtes Zugmittel (31) zum Auslenken des Teiles (M) der Außenhaut aufweist.

28. Anordnung nach Anspruch 26, **dadurch gekennzeichnet, dass** der Hebelmechanismus mindestens einen zum Auslenken des Teiles (M) der Außenhaut verschwenkbaren Hebel (41) aufweist.

29. Anordnung nach Anspruch 27, **dadurch gekennzeichnet, dass** das Zugmittel (31) zum Auslenken des Teiles (M) der Außenhaut straffbar ist.

30. Anordnung nach Anspruch 28 oder 29, **dadurch gekennzeichnet, dass** zum Bewegen des Teiles (M) der Außenhaut entgegen der Auslenkrichtung (a) der Hebel (41) verschwenkt wird oder das Zugmittel (31) entgegen seiner Spannung belastet wird.

31. Anordnung nach Anspruch 23 und 30, **dadurch gekennzeichnet, dass** das Verschwenken des Hebels (41) bzw. die Bewegung des Teiles (M) der Außenhaut entgegen der Spannung der Zugmittels (31) nur bei einem Aufprall auf den Teil (M) der Außenhaut innerhalb des vorgegebenen Richtungsbereiches möglich ist.

32. Anordnung nach Anspruch 11 und 23, **dadurch gekennzeichnet, dass** eine Bewegung des Kolbens (21) entgegen der Auslenkrichtung (a) nur bei einem Aufprall auf den Teil (M) der Außenhaut innerhalb des vorgegebenen Richtungsbereiches auslösbar ist.

33. Anordnung nach einem der vorhergehenden Ansprüche, **dadurch gekennzeichnet, dass** die Auslenkeinrichtung (4) mit einem elastischen Element (42) gekoppelt ist, das die Auslenkeinrichtung (4) in Auslenkrichtung (a) vorspannt.

34. Anordnung nach Anspruch 33, **dadurch gekennzeichnet, dass** ein Verriegelungselement (43) vorgesehen ist, welches ein Auslenken des Teiles (M) der Außenhaut durch die Auslenkeinrichtung (4) verhindert.

35. Anordnung nach Anspruch 34, **dadurch gekennzeichnet, dass** die Verriegelung durch den Aufprall einer Person auf das Fahrzeug, z. B. auf den Teil (M) der Außenhaut, aufhebbar ist.

36. Anordnung nach einem der vorhergehenden Ansprüche, **dadurch gekennzeichnet, dass** die Auslenkeinrichtung (4) durch einen ersten Aufprall einer Person auf das Fahrzeug aktivierbar ist, so dass der Teil (M) der Außenhaut ausgelenkt wird.

37. Anordnung nach Anspruch 36, **dadurch gekennzeichnet, dass** die beim Aufprall erzeugte Kraft auf die Auslenkeinrichtung einwirkt, so dass diese aktiviert wird.

38. Anordnung nach einem der vorhergehenden Ansprüche, **dadurch gekennzeichnet, dass** die Auslenkeinrichtung (1, 2, 3) in Abhängigkeit von dem Signal eines mit der Auslenkeinrichtung gekoppelten Sensors aktivierbar ist.

39. Anordnung nach einem der vorhergehenden Ansprüche, **dadurch gekennzeichnet, dass** der Teil (M) der Außenhaut durch eine Klappe des Kraftfahrzeugs gebildet wird.

40. Anordnung nach Anspruch 39, **dadurch gekennzeichnet, dass** die Klappe (M) eine Motorhaube oder eine Kofferraumklappe ist.

## Claims

1. Arrangement for deflecting part, formed by a flap, of the external panelling of a motor vehicle, in particular an engine hood or a trunk flap, in the event of a crash in order, when a person situated outside the motor vehicle impacts against the deflected part, to dissipate impact energy by a movement of the part counter to the deflecting direction, having a device for deflecting part of the external panelling, which device acts on at least one point of the part and which, when a person impacts against the part, permits a movement of the part counter to the deflecting direction, the application point of the deflecting device (1, 2, 3, 4) being provided in the region of an end (H) of the part (M), which end is assigned to the passenger cell,
**characterized**
**in that** the deflecting device (1, 2, 3, 4) has an element (10; 10'; 20, 21; 26; 31; 43) which, upon an impact of a person against the deflected part (M), in which the impact forces (F_{b}, Fₕ) act counter to the deflecting direction, can oppose a movement of the part (M) of the external panelling counter to the deflecting direction (a) in order to prevent it, and in that the deflecting device (1, 2, 3, 4) is controlled as a function of the time, the location and/or the direction of the impact in such a manner that, as a function of the instant of the impact and/or the location of the impact and/or the direction of the impact against the deflected part (M) of the external panelling, the deflecting device (1, 2, 3, 4) permits a movement of the part (M) of the external panelling counter to the deflecting direction (a) or opposes such a movement, in order to prevent it.

2. Arrangement according to Claim 1, **characterized in that** the deflecting device (1, 2, 3, 4) permits a movement of the part (M) counter to the deflecting direction (a) only after a specifiable instant after the deflection of the part (M) of the external panelling.

3. Arrangement according to Claim 1 or 2, **characterized in that** the deflecting device (1, 2) deflects the part (M) of the external panelling under the action of the pressure of a fluid, in particular of a gas.

4. Arrangement according to Claim 3, **characterized in that** the pressure of the fluid is time-controlled and preferably decreases after the deflection of the part (M) of the external panelling.

5. Arrangement according to Claim 4, **characterized in that** the pressure of the fluid acting on the deflected part (M) of the external panelling can be reduced by some of the fluid being discharged.

6. Arrangement according to Claim 5, **characterized in that** vent openings are provided for discharging fluid.

7. Arrangement according to Claim 6, **characterized in that** the outlet cross section of the vent openings can be controlled.

8. Arrangement according to one of the preceding claims, **characterized in that** the deflecting device (1, 2, 3) can be triggered pyrotechnically.

9. Arrangement according to one of Claims 3 to 7 and Claim 8, **characterized in that** the pressure is produced pyrotechnically.

10. Arrangement according to one of the preceding claims, **characterized in that** the deflecting device (1, 2) comprises an element (10, 21) which can be filled with fluid and, when filled, acts on the part (M) of the external panelling.

11. Arrangement according to one of the preceding claims, **characterized in that** the deflecting device (2) comprises a piston (21) which can act on the part (M) of the external panelling.

12. Arrangement according to Claim 3 and Claim 10 or 11, **characterized in that** the fluid serves for filling the fillable element (10) or for moving the piston (21).

13. Arrangement according to one of the preceding claims, **characterized in that** the deflecting device can be locked in such a manner that it does not permit any movement of the part (M) of the external panelling counter to the deflecting direction (a) and **in that** the locking can be released by the impact of a body part of a person against the part (M) of the external panelling, so that, upon a further impact, the part moves counter to the deflecting direction (a).

14. Arrangement according to Claim 13, **characterized in that** a hook is provided for the locking.

15. Arrangement according to one of the preceding claims, **characterized in that** the deflecting device (2, 3, 4) can be moved counter to the deflecting direction (a) only upon the impact of a body part of a person within a certain region of the part (M) of the external panelling.

16. Arrangement according to Claim 15, **characterized in that** the region surrounds the point of the part (M) against which the deflecting device (2, 3, 4) acts.

17. Arrangement according to one of the preceding claims, **characterized in that** the deflecting device acts on the part (M) of the external panelling via an elastically or plastically deformable element (10; 20, 21; 26; 42).

18. Arrangement according to Claims 16 and 17, **characterized in that** when a person impacts against the part (M) of the external panelling in the environment of the elastically or plastically deformable element (10; 20, 21; 26; 31; 42), this element (10; 20, 21; 26; 31; 42) executes such a movement that the part (M) of the external panelling moves counter to the deflecting direction (a).

19. Arrangement according to Claim 17 or 18, **characterized in that** the deformation element is formed by a spring-elastic element (26, 42).

20. Arrangement according to Claim 17 or 18, **characterized in that** the deformation element is formed by a flexible coupling element (31) between the deflecting device (3) and the part (M) of the external panelling, for example in the form of a flexible traction means.

21. Arrangement according to Claim 17 or 18, **characterized in that** the deformation element is formed by a telescopic element (20, 21).

22. Arrangement according to one of the preceding claims, **characterized in that** the deflecting device (1, 2, 3, 4) is of at least partially reversible design, so that a movement of the part (M) of the external panelling counter to the deflecting direction (a) is made possible by a movement of elements of the deflecting device (1, 2, 3, 4), which movement is opposed to the movement during deflection of the part (M).

23. Arrangement according to one of the preceding claims, **characterized in that** the deflecting device (2, 3, 4) can be moved counter to the deflecting direction (a) only upon the impact of a body part of a person against the part (M) of the external panelling within a certain directional region.

24. Arrangement according to one of Claims 17 to 21 and Claim 23, **characterized in that** the deformation element (20, 21; 26) can be deformed only upon an impact with a direction within the specified directional region.

25. Arrangement according to Claim 23, **characterized in that** at least one element (21, 41) of the deflecting device (2, 4), which element can be moved for the deflection of the part (M) of the external panelling, is designed and/or arranged in such a manner that the deflecting device (2, 4) permits a movement of the part (M) counter to the deflecting direction (a) only upon an impact within the specified directional region.

26. Arrangement according to one of the preceding claims, **characterized in that** the deflecting device (4) has a lever mechanism for deflecting the part (M) of the external panelling.

27. Arrangement according to one of the preceding claims, **characterized in that** the deflecting device (3) has a movably guided traction means (31) for deflecting the part (M) of the external panelling.

28. Arrangement according to Claim 26, **characterized in that** the lever mechanism has at least one lever (41) which can be pivoted for the deflection of the part (M) of the external panelling.

29. Arrangement according to Claim 27, **characterized in that** the traction means (31) can be tightened for the deflection of the part (M) of the external panelling.

30. Arrangement according to Claim 28 or 29, **characterized in that** to move the part (M) of the external panelling counter to the deflecting direction (a), the lever (41) is pivoted or the traction means (31) is subjected to a load counter to its tensioning.

31. Arrangement according to Claims 23 and 30, **characterized in that** the pivoting of the lever (41) or the movement of the part (M) of the external panelling counter to the tensioning of the traction means (31) is possible only upon an impact against the part (M) of the external panelling within the specified directional region.

32. Arrangement according to Claims 11 and 23, **characterized in that** a movement of the piston (21) counter to the deflecting direction (a) can be triggered only upon an impact against the part (M) of the external panelling within the specified directional region.

33. Arrangement according to one of the preceding claims, **characterized in that** the deflecting device (4) is coupled to an elastic element (42) which pretensions the deflecting device (4) in the deflecting direction (a).

34. Arrangement according to Claim 33, **characterized in that** a locking element (43) which prevents a deflection of the part (M) of the external panelling by the deflecting device (4) is provided.

35. Arrangement according to Claim 34, **characterized in that** the locking can be cancelled by the impact of a person against the vehicle, for example against the part (M) of the external panelling.

36. Arrangement according to one of the preceding claims, **characterized in that** the deflecting device (4) can be activated by a first impact of a person against the vehicle, so that the part (M) of the external panelling is deflected.

37. Arrangement according to Claim 36, **characterized in that** the force produced during the impact acts on the deflecting device, so that the latter is activated.

38. Arrangement according to one of the preceding claims, **characterized in that** the deflecting device (1, 2, 3) can be activated as a function of the signal of a sensor coupled to the deflecting device.

39. Arrangement according to one of the preceding claims, **characterized in that** the part (M) of the external panelling is formed by a flap of the motor vehicle.

40. Arrangement according to Claim 39, **characterized in that** the flap (M) is an engine hood or a trunk flap.

## Revendications

1. Dispositif pour dévier un élément, formé par un couvercle, de l'enveloppe extérieure d'un véhicule automobile, en particulier un capot ou un couvercle de coffre, lors d'un accident, pour amortir l'énergie de collision lors d'une collision avec une personne se trouvant à l'extérieur du véhicule automobile, sur l'élément dévié, grâce au mouvement de l'élément à l'encontre de la direction de déviation, à l'aide d'un dispositif pour dévier l'élément de l'enveloppe extérieure, lequel saisit au moins un endroit sur l'élément et permet un mouvement de l'élément à l'encontre de la direction de déviation lors de la collision d'une personne sur l'élément, l'endroit de saisie du dispositif de déviation (1, 2, 3, 4) étant prévu dans la zone d'une extrémité (H) de l'élément (M) appartenant à l'emplacement passager du véhicule,
**caractérisé en ce que**
le dispositif de déviation (1, 2, 3, 4) est pourvu d'un élément (10 ; 10' ; 20, 21 ; 26 ; 31 ; 43), lequel, lors de la collision d'une personne sur l'élément dévié (M) par laquelle les énergies de collision (F_{b}, Fₕ) s'exercent contre la direction de déviation, peut agir contre un mouvement de l'élément (M) de l'enveloppe extérieure contre la direction de déviation (a), pour l'éviter, et **en ce que** la direction de déviation (1, 2, 3, 4) est commandée en fonction de la durée, de l'endroit et/ou de la direction de la collision, de telle sorte que, en fonction du moment de la collision et/ou de l'endroit de la collision et/ou de la direction de la collision avec l'élément dévié (M) de l'enveloppe extérieure, le dispositif de déviation (1, 2, 3, 4) permet un mouvement de l'élément (M) de l'enveloppe extérieure contre la direction de déviation (a) ou agit contre un tel mouvement, pour l'empêcher.

2. Dispositif selon la revendication 1, **caractérisé en ce que** le dispositif de déviation (1, 2, 3, 4) permet un mouvement de l'élément (M) contre la direction de déviation (a) uniquement à partir d'un moment pouvant être prédéterminé après la déviation de l'élément (M) de l'enveloppe extérieure.

3. Dispositif selon la revendication 1 ou 2, **caractérisé en ce que** le dispositif de déviation (1, 2) dévie l'élément (M) de l'enveloppe extérieure sous l'effet de la pression d'un fluide, en particulier d'un gaz.

4. Dispositif selon la revendication 3, **caractérisé en ce que** la pression du fluide est commandée temporairement et diminue de préférence après la déviation de l'élément (M) de l'enveloppe extérieure.

5. Dispositif selon la revendication 4, **caractérisé en ce que** la pression du fluide, laquelle agit sur l'élément dévié (M) de l'enveloppe extérieure, peut être réduite à l'aide de l'échappement d'éléments du fluide.

6. Dispositif selon la revendication 5, **caractérisé en ce que** des ouvertures d'aération sont prévues pour l'échappement du fluide.

7. Dispositif selon la revendication 6, **caractérisé en ce que** la section de sortie des ouvertures d'aération peut être commandée.

8. Dispositif selon l'une quelconque des revendications précédentes, **caractérisé en ce que** le dispositif de déviation (1, 2, 3) peut être déclenché de manière pyrotechnique.

9. Dispositif selon l'une quelconque des revendications 3 à 7 et la revendication 8, **caractérisé en ce que** la pression est produite de manière pyrotechnique.

10. Dispositif selon l'une quelconque des revendications précédentes, **caractérisé en ce que** le dispositif de déviation (1, 2) est pourvu d'un élément pouvant être rempli de fluide (10, 21), qui agit lors du remplissage sur l'élément (M) de l'enveloppe extérieure.

11. Dispositif selon l'une quelconque des revendications précédentes, **caractérisé en ce que** le dispositif de déviation (2) est pourvu d'un piston (21), qui peut agir sur l'élément (M) de l'enveloppe extérieure.

12. Dispositif selon la revendication 3 et la revendication 10 ou 11, **caractérisé en ce que** le fluide sert au remplissage de l'élément pouvant être rempli (10) ou au déplacement du piston (21).

13. Dispositif selon l'une quelconque des revendications précédentes, **caractérisé en ce que** le dispositif de déviation peut être verrouillé de telle sorte qu'aucun mouvement de l'élément (M) de l'enveloppe extérieure contre la direction de déviation (a) ne soit permis, et **en ce que** le verrouillage par l'intermédiaire de la collision d'une partie du corps d'une personne sur l'élément (M) de l'enveloppe extérieure est amovible, de sorte que, lors d'une collision supplémentaire, un mouvement de l'élément est effectué contre la direction de déviation (a).

14. Dispositif selon la revendication 13, **caractérisé en ce qu'**un crochet est prévu pour le verrouillage.

15. Dispositif selon l'une quelconque des revendications précédentes, **caractérisé en ce que** le dispositif de déviation (2, 3, 4) n'est mobile que lors de la collision d'une partie du corps d'une personne à l'intérieur d'une zone précise de l'élément (M) de l'enveloppe extérieure contre la direction de déviation (a).

16. Dispositif selon la revendication 15, **caractérisé en ce que** la zone entoure l'endroit de l'élément (M), qui est saisi par le dispositif de déviation (2, 3, 4).

17. Dispositif selon l'une quelconque des revendications précédentes, **caractérisé en ce que** le dispositif de déviation saisit l'élément (M) de l'enveloppe extérieure à l'aide d'un élément déformable élastiquement ou plastiquement (10 ; 20, 21 ; 26 ; 42).

18. Dispositif selon les revendications 16 et 17, **caractérisé en ce que** l'élément déformable élastiquement ou plastiquement (10 ; 20, 21 ; 26 ; 31 ; 42), lors d'une collision d'une personne sur l'élément (M) de l'enveloppe extérieure, effectue un mouvement au voisinage de cet élément (10 ; 20 ; 21 ; 26 ; 31 ; 42), de telle sorte que l'élément (M) de l'enveloppe extérieure se déplace contre la direction de déviation (a).

19. Dispositif selon la revendication 17 ou 18, **caractérisé en ce que** l'élément de déformation est formé à l'aide d'un élément déformable élastiquement (26, 42).

20. Dispositif selon la revendication 17, **caractérisé en ce que** l'élément de déformation est formé à l'aide d'un élément de couplage flexible (31) entre le dispositif de déviation (3) et l'élément (M) de l'enveloppe extérieure, par exemple sous la forme d'un moyen de traction flexible.

21. Dispositif selon la revendication 17 ou 18, **caractérisé en ce que** l'élément de déformation est formé par l'intermédiaire d'un élément pouvant être télescopé (20, 21).

22. Dispositif selon l'une quelconque des revendications précédentes, **caractérisé en ce que** le dispositif de déviation (1, 2, 3, 4) est formé de manière au moins partiellement réversible, se sorte qu'un mouvement de l'élément (M) de l'enveloppe extérieure contre la direction de dérivation (a) soit permis à l'aide d'un mouvement d'élément du dispositif de déviation (1, 2, 3, 4), qui est opposé au mouvement lors de la dérivation de l'élément (M).

23. Dispositif selon l'une quelconque des revendications précédentes, **caractérisé en ce que** le dispositif de déviation (2, 3, 4) n'est mobile que lors de la collision d'une partie du corps d'une personne sur l'élément (M) de l'enveloppe extérieure à l'intérieur d'une zone de direction précise contre la direction de déviation (a).

24. Dispositif selon l'une quelconque des revendications 17 à 21 et la revendication 23, **caractérisé en ce que** l'élément de déformation (20, 21, 26) est déformable uniquement lors d'une collision avec une direction à l'intérieur de la zone de direction prédéterminée.

25. Dispositif selon la revendication 23, **caractérisé en ce qu'**au moins un élément mobile (21, 41) du dispositif de déviation (2, 4) pour la déviation de l'élément (M) de l'enveloppe extérieure est formé et/ou agencé de telle sorte que le dispositif de déviation (2, 4) permette un mouvement de l'élément (M) contre la direction de déviation (a) uniquement lors de la collision à l'intérieur de la zone de direction prédéterminée.

26. Dispositif selon l'une quelconque des revendications précédentes, **caractérisé en ce que** le dispositif de déviation (4) est pourvu d'un mécanisme à levier pour la déviation de l'élément (M) de l'enveloppe extérieure.

27. Dispositif selon l'une quelconque des revendications précédentes, **caractérisé en ce que** le dispositif de déviation (3) est pourvu d'un moyen de traction commandé de manière mobile (31) pour la déviation de l'élément (M) de l'enveloppe extérieure.

28. Dispositif selon la revendication 26, **caractérisé en ce que** le mécanisme à levier est pourvu d'au moins un levier pivotant (41) pour la déviation de l'élément (M) de l'enveloppe extérieure.

29. Dispositif selon la revendication 27, **caractérisé en ce que** le moyen de traction (31) peut être tendu pour la déviation de l'élément (M) de l'enveloppe extérieure.

30. Dispositif selon la revendication 28 ou 29, **caractérisé en ce que**, en vue du mouvement de l'élément (M) de l'enveloppe extérieure contre la direction de déviation (a), le levier (41) est pivoté ou le moyen de traction (31) est soumis à un effort à l'encontre de sa tension.

31. Dispositif selon les revendications 23 et 30, **caractérisé en ce que** le pivotement du levier (41), ou plutôt le mouvement de l'élément (M) de l'enveloppe extérieure contre la tension du moyen de traction (31) n'est possible que lors de la collision sur l'élément (M) de l'enveloppe extérieure à l'intérieur de la zone de direction prédéterminée.

32. Dispositif selon les revendications 11 et 23, **caractérisé en ce qu'**un mouvement du piston (21) contre la direction de déviation (a) ne peut être déclenché que lors de la collision sur l'élément (M) de l'enveloppe extérieure à l'intérieur de la zone de direction prédéterminée.

33. Dispositif selon l'une quelconque des revendications précédentes, **caractérisé en ce que** le dispositif de déviation (4) est couplé à un élément élastique (42), lequel précontraint le dispositif de déviation (4) dans la direction de déviation (a).

34. Dispositif selon la revendication 33, **caractérisé en ce qu'**un élément de verrouillage (43) est prévu, lequel empêche une déviation de l'élément (M) de l'enveloppe extérieure à travers le dispositif de déviation (4).

35. Dispositif selon la revendication 34, **caractérisé en ce que** le verrouillage dû à la collision d'une personne sur le véhicule, par exemple sur l'élément (M) de l'enveloppe extérieure, est supprimable.

36. Dispositif selon l'une quelconque des revendications précédentes, **caractérisé en ce que** le dispositif de déviation (4) est activable suite à une première collision d'une personne sur le véhicule, de sorte que l'élément (M) de l'enveloppe est dévié.

37. Dispositif selon la revendication 36, **caractérisé en ce que**, lors de la collision, l'énergie produite agit sur le dispositif de déviation, de sorte que celui-ci soit activé.

38. Dispositif selon l'une quelconque des revendications précédentes, **caractérisé en ce que** le dispositif de déviation (1, 2, 3) peut être activé en fonction du signal d'un capteur couplé au dispositif de déviation.

39. Dispositif selon l'une quelconque des revendications précédentes, **caractérisé en ce que** l'élément (M) de l'enveloppe extérieure est formé au travers d'un couvercle du véhicule automobile.

40. Dispositif selon la revendication 39, **caractérisé en ce que** le couvercle (M) est un capot ou un couvercle de coffre.
